(19)

Europäisches
Patentamt
European
Patent Office
Office européen
des brevets

(11)　**EP 4 292 415 A1**

(12)　**EUROPEAN PATENT APPLICATION**

(43) Date of publication:
**20.12.2023　Bulletin 2023/51**

(21) Application number: **23175944.0**

(22) Date of filing: **30.05.2023**

(51) International Patent Classification (IPC):
**A01C 14/00** $^{(2006.01)}$　　**A01B 69/04** $^{(2006.01)}$
**G05D 1/02** $^{(2020.01)}$

(52) Cooperative Patent Classification (CPC):
**A01B 69/008; A01C 14/00; G05D 1/0212;**
A01C 7/102

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:　**09.06.2022　JP 2022093577**

(71) Applicant: **Yanmar Holdings Co., Ltd.
Osaka-shi, Osaka (JP)**

(72) Inventors:
• **MIYAKE, Koji
Okayama (JP)**
• **ONISHI, Kenta
Okayama (JP)**

(74) Representative: **Dennemeyer & Associates S.A.
Postfach 70 04 25
81304 München (DE)**

(54)　**WORK METHOD, WORK SYSTEM AND WORK PROGRAM**

(57)　Provided are a work method, a work system, and a work program that can align a work starting position of each work route in an entire field. An acquisition processing unit 112 obtains a plant interval Lt of agricultural materials. A setting processing unit 115 sets a work starting reference position Px, which is a reference position for setting a work starting position Ps where supply work of the agricultural materials is started, and sets the work starting position Ps corresponding to each of a plurality of work routes on the basis of the plant interval Lt and the work starting reference position Px.

**FIG. 17**

## Description

TECHNICAL FIELD

The present invention relates to a work method, a work system, and a work program for supplying agricultural materials to a field by a work vehicle.

BACKGROUND ART

Conventionally, with regard to planting work for planting seedlings in a field, there is known a technique for aligning a planting position (work starting position) in each work route after turning in a headland region (refer to, for example, Patent Document 1). For example, Patent Document 1 discloses a configuration to start planting work in a case where a turning angle of a machine body exceeds a predetermined value at the time of such turning and a case where rotational frequencies of a left rear wheel and a right rear wheel of the machine body are substantially equal.

PRIOR ART DOCUMENT

PATENT DOCUMENT

Patent Document 1: Japanese Patent Laid-open Publication No. 2002-335720

SUMMARY OF INVENTION

TECHNICAL PROBLEM

However, since the conventional technique shows a configuration to align a work ending position on a work route on current travel with a work starting position in a next work route, it is expected that there may be a deviation among work starting positions in respective work routes in a case of viewing an entire field.

An object of the present invention is to provide a work method, a work system, and a work program for being capable of aligning the work starting positions in the respective work routes in the entire field.

SOLUTION TO PROBLEM

A work method according to the present invention is a method for supplying agricultural materials to a field by a work vehicle, the method comprising: obtaining a supply interval of the agricultural materials; setting a work starting reference position that is a reference position for setting a work starting position where supply work of the agricultural materials is started; and setting the work starting position corresponding to each of a plurality of work routes on the basis of the supply interval and the work starting reference position.

A work system according to the present invention is a system for supplying agricultural materials to a field by a work vehicle. The work system comprises an acquisition processing unit that obtains the supply interval of the agricultural materials and a setting processing unit that sets a work starting reference position that is a reference position for setting a work starting position where the supply work of the agricultural materials is started and that sets the work starting position corresponding to each of a plurality of work routes on the basis of the supply interval and the work starting reference position.

A work program according to the present invention is a program for supplying agricultural materials to a field by a work vehicle, the program causing one or more processors to execute: obtaining a supply interval of the agricultural materials; setting a work starting reference position that is a reference position for setting a work starting position where supply work of the agricultural materials is started; and setting the work starting position corresponding to each of a plurality of work routes on the basis of the supply interval and the work starting reference position.

ADVANTAGEOUS EFFECTS OF INVENTION

According to the present invention, it is possible to provide a work method, a work system, and a work program that can align the work starting position of each work route in the entire field.

BRIEF DESCRIPTION OF DRAWINGS

FIG. 1 is a block diagram illustrating a configuration of a work system according to an embodiment of the present invention.
FIG. 2A is a side diagram illustrating one example of a work vehicle according to an embodiment of the present invention.
FIG. 2B is a plane diagram illustrating one example of a work vehicle according to an embodiment of the present invention.
FIG. 3 is a diagram illustrating one example of a field and a target route according to an embodiment of the present invention.
FIG. 4A is a block diagram illustrating a specific example of a planting driving device according to an embodiment of the present invention.
FIG. 4B is a block diagram illustrating a specific example of a planting driving device according to an embodiment of the present invention.
FIG. 5 is a diagram illustrating a specific example of planting work according to Embodiment 1 of the present invention.
FIG. 6 is a diagram illustrating a specific example of planting work according to Embodiment 1 of the present invention.
FIG. 7 is a graph showing a relation between the number of corrections and the deviation rate according to Embodiment 1 of the invention.

FIG. 8 is a diagram illustrating a specific example of planting work according to Embodiment 1 of the present invention.

FIG. 9 a diagram illustrating a specific example of planting work according to a reference embodiment.

FIG. 10 is a diagram illustrating a specific example of planting work according to Embodiment 1 of the present invention.

FIG. 11 is a diagram illustrating one example of an operation screen of an operation terminal according to an embodiment of the present invention.

FIG. 12 is a diagram illustrating one example of a setting screen of an operation terminal according to Embodiment 1 of the present invention.

FIG. 13 is a flowchart showing one example of a procedure for planting work processing that is carried out by a work system according to Embodiment 1 of the present invention.

FIG. 14 is a diagram illustrating a specific example of planting work according to Embodiment 1 of the present invention.

FIG. 15 is a diagram illustrating a specific example of planting work according to Embodiment 1 of the present invention.

FIG. 16 is a diagram illustrating one example of a work starting reference position and a virtual work straight line according to Embodiment 2 of the present invention.

FIG. 17 is a diagram illustrating a specific example of planting work according to Embodiment 2 of the present invention.

FIG. 18 is a diagram illustrating a specific example of planting work according to Embodiment 2 of the present invention.

FIG. 19 is a diagram illustrating a specific example of planting work according to Embodiment 2 of the present invention.

FIG. 20 is a diagram illustrating a specific example of planting work according to Embodiment 2 of the present invention.

FIG. 21 is a flowchart showing one example of a procedure for planting work processing that is performed by a work system according to Embodiment 2 of the present invention.

DESCRIPTION OF EMBODIMENTS

The following embodiments are examples that have embodied the present invention and are not intended to limit a technical scope of the present invention.

Embodiment 1

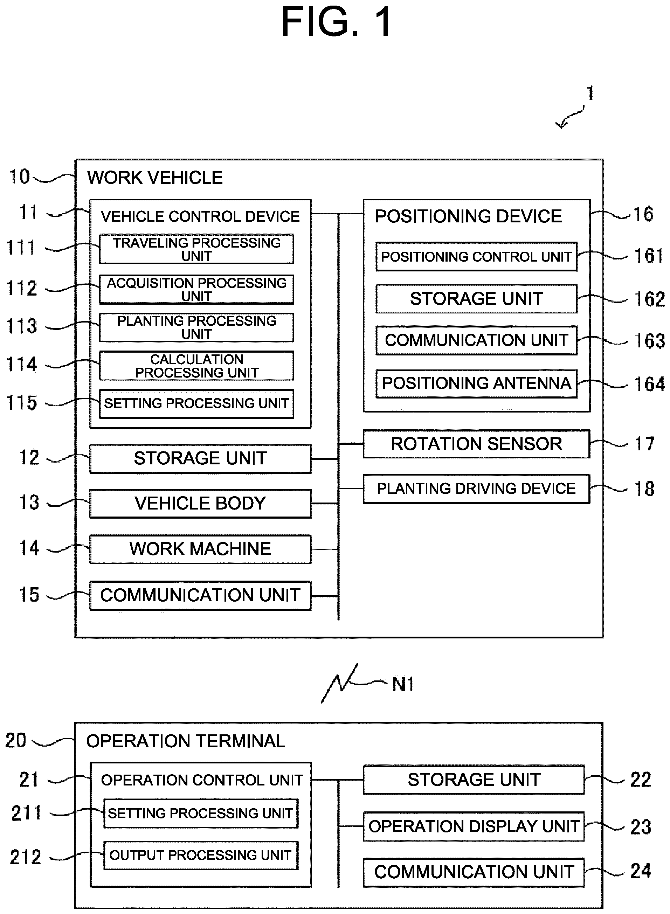

As illustrated in FIG. 1, a work system 1 according to an embodiment of the present invention includes a work vehicle 10 and an operation terminal 20. The work vehicle 10 and the operation terminal 20 can communicate with each other via a communication network N1. For example, the work vehicle 10 and the operation terminal 20 can communicate with each other via a wired channel, a portable telephone network, a packet network, or a wireless LAN.

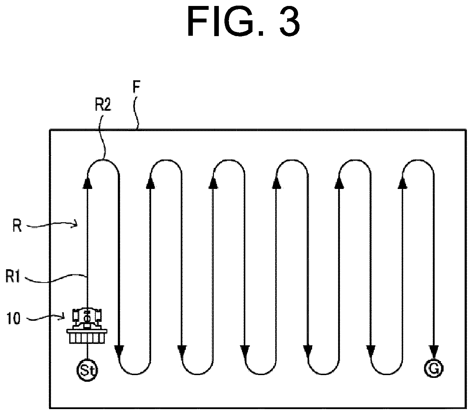

The work vehicle according to the present invention is a vehicle that supplies to a field agricultural materials such as seedlings, seeds, fertilizers, and chemical agents. The present embodiment describes as one example of a work vehicle a rice transplanter that performs planting work for planting seedlings in a field. The work vehicle 10 is provide with a configuration of being capable of traveling automatically (autonomous travel) in a field F (refer to FIG. 3) in accordance with a predetermined target route R. In addition, the work vehicle 10 can perform predetermined work while traveling automatically in the field F.

On the basis of current position information of the work vehicle 10 to be calculated by a positioning device 16, the work vehicle 10 automatically travels in accordance with the target route R that has been already generated with respect to the field F. It is noted that the target route R includes a work route (straight route R1) where a work machine 14 (planting unit) performs planting work and a non-work route (turning route R2) where the work machine 14 does not perform the planting work, thus including a plurality of the straight routes R1 and a plurality of the turning routes R2 from a travel starting position St to a travel stopping position G. The target route R illustrated in FIG. 3 represents a route that the work vehicle 10 automatically travels on the straight routes R1 and the turning routes R2, respectively.

In addition, the work vehicle 10 may automatically travel on the target route R in response to operations by an operator on board or may automatically travel only on the straight route R1. For example, an operator may be able to ride on the work vehicle 10 and cause the work vehicle 10 to travel while switching between automatic traveling (automatic steering) on the straight route R1 and manual traveling (manual steering) on the turning route R2. Alternatively, for example, an operator may be able to ride on the work vehicle 10 and cause the work vehicle 10 to automatically travel on the target route R or a portion of the target route R (for example, straight route R1) while performing operations (an accelerator operation, a brake operation, and the like) for changing a speed of the vehicle (travel speed). Alternatively, the work vehicle 10 may automatically travel on the target route R while controlling the speed of the vehicle in accordance with information on the speed of the vehicle set for each work route. Furthermore, the work vehicle 10 may automatically travel on the target route R without an operator on board.

The operation terminal 20 displays various information related to work performed by the work vehicle 10 on the operation display unit 23, and receives an operation by an operator to carry out processing in response to the operation. For example, the operator operates the operation terminal 20 to set necessary information for automatic traveling or to output to the work vehicle 10 a work starting instruction (or an automatic traveling work starting instruction). In addition, the operation terminal 20 displays information such as a working state and a traveling condition related to the work vehicle 10 during automatic travel. The operator can grasp the working state and the traveling condition at the operation terminal 20. The operation terminal 20 is, for example, a portable terminal (such as a tablet terminal) that can be carried by the operator and that can be attached to or removed from the work vehicle 10. The operation terminal 20 may also be a device fixed to the work vehicle 10.

[Work Vehicle 10]

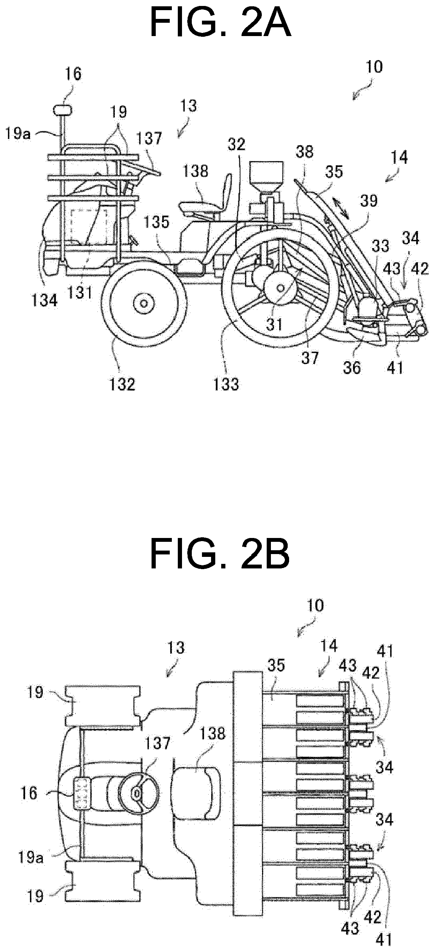

As illustrated in FIG. 1 and FIG. 2, the work vehicle 10 includes a vehicle control device 11, a storage unit 12, a vehicle body 13, a work machine 14, a communication unit 15, a positioning device 16, a rotation sensor 17, a planting driving device 18, and the like. The vehicle control device 11 is electrically connected to the storage unit 12, the vehicle body 13, the work machine 14, the positioning device 16, the rotation sensor 17, and the planting driving device 18. It is noted that the vehicle control device 11 and the positioning device 16 may be capable of performing wireless communication.

First, a rice transplanter, which is one example of the work vehicle 10, will be described with reference to FIG. 2A and FIG. 2B. FIG. 2A is a side diagram of the work vehicle 10 and FIG. 2B is a plane diagram of the work vehicle 10. The work vehicle 10 is provided with a vehicle body 13, a pair of left and right front wheels 132, a pair of left and right rear wheels 133, and a work machine 14 (planting unit).

An engine 131 is disposed inside a hood 134 that is arranged at a front portion of the vehicle body 13. Power generated by the engine 131 is transmitted to the front wheels 132 and the rear wheels 133 via a transmission case 135. The power that has been transmitted via the transmission case 135 is transmitted to the work machine 14 via a PTO shaft 37 that is disposed at a rear portion of the vehicle body 13. It is noted that the PTO shaft 37 is configured such that power can be transmitted to the PTO shaft 37 via a planting clutch (working clutch, which is not illustrated).

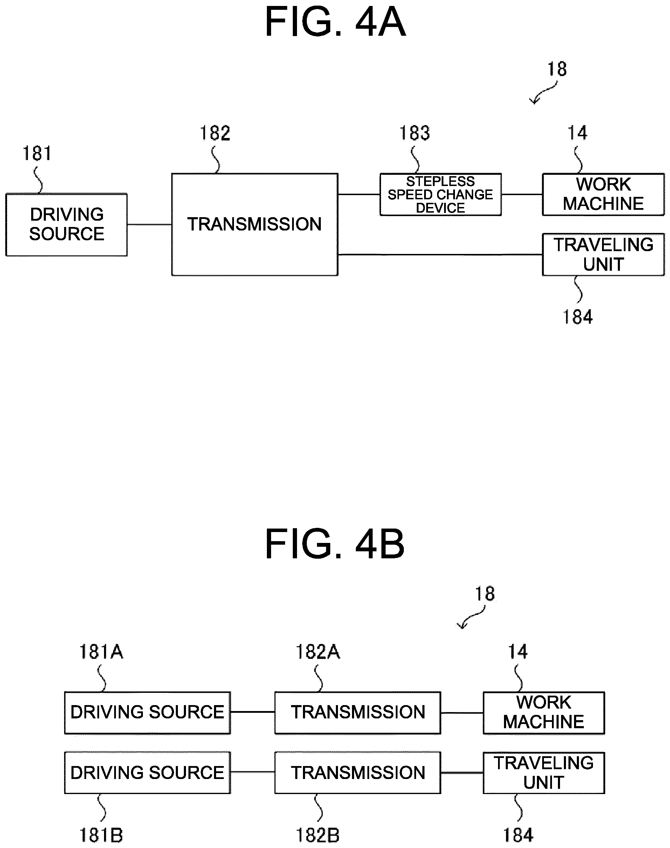

FIG. 4A and FIG. 4B illustrate configuration examples of the planting driving device 18. The planting driving device 18 illustrated in FIG. 4A comprises one driving source 181 (an engine or a motor), a transmission 182 that transmits power of the driving source 181 to a stepless speed change device 183 and a traveling unit 184, the stepless speed change device 183 that transmits power of the transmission 182 to the work machine 14, the work machine 14 driven by the power transmitted via the stepless speed change device 183, and the traveling unit 184 driven by the power transmitted via the transmission 182. The work machine 14 performs planting work by the power in accordance with commands from the vehicle control device 11 (planting processing unit 113). The traveling unit 184 performs a traveling movement with the power in accordance with commands from the vehicle control device 11 (traveling processing unit 111).

The planting driving device 18 illustrated in FIG. 4B has two driving sources 181A and 181B (engines or motors), a transmission 182A that transmits power of the driving source 181A to the work machine 14, a transmission 182B that transmits power of the driving source 181B to the traveling unit 184, the work machine 14 driven by the power transmitted via the transmission 182A, and the traveling unit 184 driven by the power transmitted via the transmission 182B. The planting driving device 18 may have a configuration illustrated in FIG. 4A or FIG. 4B.

An operator's seat 138, on which an operator rides, is disposed at a position between the front wheels 132 and the rear wheels 133 wheels in a front and rear direction of the vehicle body 13. In front of the operator's seat 138, there are disposed operation tools such as a steering wheel 137, a main speed lever (not illustrated), and a planting clutch lever (not illustrated). The steering wheel 137 is a control tool for changing a steering angle of the work vehicle 10. The main speed lever is configured so as to be able to select at least positions including "forward", "backward", "seedling relay" and "neutral". When the main speed change lever is operated to a position of "forward", power is transmitted so that the front wheels 132 and the rear wheel 133 can rotate in a direction that causes the work vehicle 10 to move forward. When the main speed change lever is operated to a position of "backward", power is transmitted so that the front wheels 132 and the rear wheels 133 can rotate in a direction that causes the work vehicle 10 to move backward. When the main speed change lever is operated to a position of "seedling relay", such transmission of power to the front wheels 132, the rear wheels 133, and the PTO shaft 37 is cut off. When the main speed lever is operated to a position of "neutral", such transmission of power to the front wheels 132 and the rear wheels 133 is cut off while such transmission of power to the PTO shaft 37 is maintained. In addition, when the planting clutch lever is operated, it is possible to switch between a transmission state where the planting clutch transmits power to the PTO shaft 37 (namely, the work machine 14) and a cut-off state where the planting clutch does not transmit power to the PTO shaft 37 (namely, the work machine 14).

The work machine 14 is coupled to the rear of the vehicle body 13 via an elevating link mechanism 31. The elevating link mechanism 31 is formed by a parallel link structure including a top link 39 and a lower link 38. An elevating cylinder 32 (elevating device) is coupled to the lower link 38. The entire work machine 14 can be vertically elevated by extending and contracting the elevating cylinder 32. This enables a height of the work machine 14 to be changed between a lowering position where the work machine 14 is lowered to perform planting work and a raising position where the work machine 14 is raised not to perform planting work. It is noted that the elevating cylinder 32 is a hydraulic cylinder but may also employs an electric cylinder. It may also be configured that the work machine 14 is elevated by an actuator other than a cylinder.

The work machine 14 (planting unit) includes a planting input case 33, a plurality of planting units 34, a seedling-loading stand 35, and a plurality of floats 36.

Each planting unit 34 has a planting transmission case 41 and a rotary case 42. Power is transmitted to the planting transmission case 41 via the PTO shaft 24 and the planting input case 33. Each planting transmission case 41 has the rotary case 42 mounted on both sides thereof in a vehicle width direction. Two planting claws 43 are mounted on each rotary case 42 so as to be arranged in parallel in a traveling direction of the work vehicle 10. These two planting claws 43 carries out planting for one row.

As illustrated in FIG. 2A, the seedling-loading stand 35 is disposed in front of and above the planting unit 34 and is configured so as to be able to load seedling mats thereon. The seedling-loading stand 35 is configured so as to be able to move for horizontal feed in a reciprocating manner (slidable in a horizontal direction). As well, the seedling-loading stand 35 is configured so as to be able to carry out vertical conveying of seedling mats intermittently and downward by reciprocating movement ends of the seedling-loading stand 35. This configuration enables the seedling-loading stand 35 to supply seedlings from the seedling mats to each of the 34 planting units. As a result, the work vehicle 110 can sequentially supply seedlings to each of the planting units 34 to continuously perform planting of the seedlings.

The float 36 illustrated in FIG. 2A is provided at a lower portion of the work machine 14, so that a lower surface of the float 36 is disposed so as to be able to come into contact with a ground. The float 36 comes into contact with the ground to level a rice field surface before seedlings are planted. The float 36 is provided with a float sensor (not illustrated) that detects a swing angle of the float 36. The swing angle of the float 36 corresponds to a distance between the rice field surface and the work machine 14. The work vehicle 10 causes the elevating cylinder 32 to move on the basis of the swing angle of the float 36 to elevate the work machine 14 vertically, thereby being capable of keeping a ground height of the work machine 14 at a constant level.

There is disposed outside of the hood 134 in the vehicle width direction a preliminary seedling stand 19, which can load a seedling box that houses preliminary mat seedlings. Upper portions of a pair of left and right preliminary seedling stands 19 are coupled to each other by a coupling frame 19a that extends in the vertical direction and in the vehicle width direction. The positioning device 16 is disposed at a center of the vehicle width direction of the coupling frame 19a.

There are disposed inside the positioning device 16 a positioning control unit 161, a storage unit 162, a communication unit 163, and a positioning antenna 164 (refer to FIG. 1). The positioning antenna 61 can receive radio waves (GNSS signals) from a satellite that forms a global navigation satellite system (GNSS). The positioning control unit 161 calculates a current position of the work vehicle 10 on the basis of the GNSS signals that the positioning antenna 164 receives from the satellite. For example, the positioning control unit 161 may perform positioning by a real-time kinematic method (RTK-GPS positioning method (RTK method)) for calculating a current position of the work vehicle 10 by using correction information that corresponds to a base station (reference station) near the work vehicle 10.

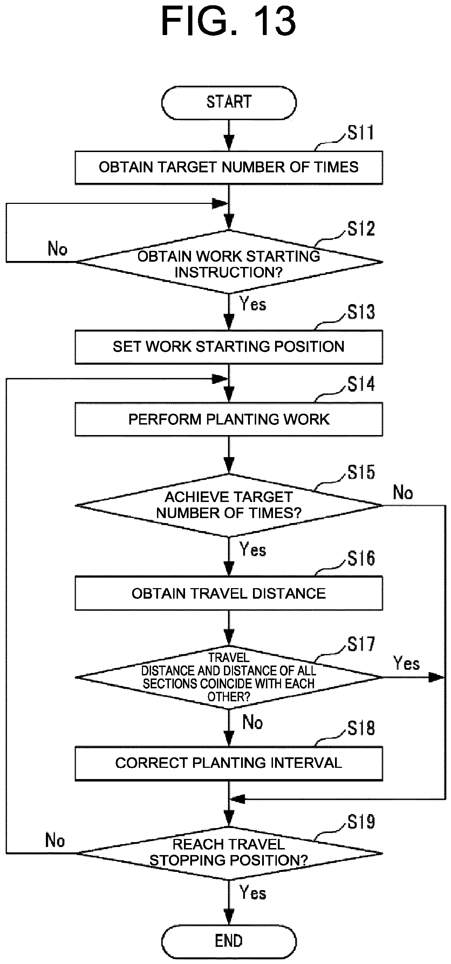

The storage unit 12 is a non-volatile storage unit such as a HDD (hard disk drive ) or a SSD (solid state drive) that stores various pieces of information. The storage unit 12 stores a control program such as a planting work program for causing the vehicle control device 11 to perform planting work processing, which will be described later (refer to FIG. 13). For example, the planting work program is stored in a computer-readable recording medium such as a flash ROM, an EEPROM, a CD or a DVD in a non-transitory manner, and is read by a predetermined reading device (not illustrated) to be stored in the storage unit 12. It is noted that the planting work program may be downloaded from a server (not illustrated) to the work vehicle 10 via the communication network N1 to be stored in the storage unit 12. In addition, the storage unit 12 may store route data of a target route R that is generated at the operation terminal 20.

The vehicle control device 11 includes control apparatuses such as a CPU, a ROM, and a RAM. The CPU is a processor that executes various pieces of arithmetic processing. The ROM is a non-volatile storage unit that previously stores a control program such as a BIOS and an OS for causing the CPU to execute various pieces of arithmetic processing. The RAM is a volatile or non-volatile storage unit that stores various pieces of information, and is used as a transient storage memory (work region) for various pieces of processing executed by the CPU. Then, the vehicle control device 11 causes the CPU to execute various types of control programs, which have been in advance stored in the ROM or the storage unit 12, thereby being capable of controlling the work vehicle 10.

The vehicle control device 11 controls movements of the work vehicle 10 in accordance with various types of user operations with respect to the work vehicle 10. In addition, the vehicle control device 11 performs automatic traveling processing of the work vehicle 10 on the basis of a current position of the work vehicle 10 calculated by the positioning device 16 and a target route R set in advance.

As illustrated in FIG. 1, the vehicle control device 11 includes various types of processing units such as a traveling processing unit 111, an acquisition processing unit 112, a planting processing unit 113, a calculation processing unit 114, and a setting processing unit 115. It is noted that the vehicle control device 11 functions as various types of the processing units by causing the CPU to perform various pieces of processing in accordance with the planting work program. Further, some or all of the processing units may be constituted of an electronic circuit. It is noted that the planting work program may be a program for causing a plurality of processors to function as the processing units. The planting work program is one example of a work program according to the present invention.

The traveling processing unit 111 controls traveling of the work vehicle 10. Specifically, the traveling processing unit 111 causes the work vehicle 10 to automatically travel in accordance with a target route R set in a field F. For example, the traveling processing unit 111 causes the work vehicle 10 to start traveling automatically after obtaining a work starting instruction from the operation terminal 20. For example, in a case where a current position of the work vehicle 10 is at a position that satisfies travel starting conditions, the operation terminal 20 outputs the work starting instruction to the work vehicle 10 when an operator presses a start button on an operation screen of the operation terminal 20. The traveling processing unit 111 causes the work vehicle 10 to start traveling automatically on the target route R upon obtaining the work starting instruction from the operation terminal 20.

Further, the traveling processing unit 111 causes the work vehicle 10 to stop traveling automatically upon obtaining a work stopping instruction from the operation terminal 20. For example, when an operator presses a temporary stop button on the operation screen of the operation terminal 20, the operation terminal 20 outputs the work stopping instruction to the work vehicle 10.

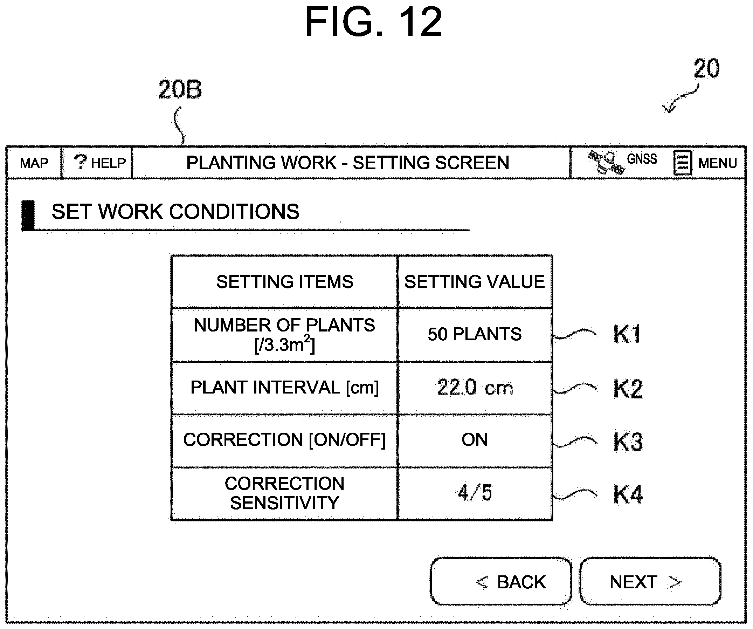

The acquisition processing unit 112 obtains the target number of times of supplying (the number of times of planting) agricultural materials (for example, seedlings) per a predetermined distance on a work route. For example, before carrying out planting work, an operator sets work conditions related to the planting work on a setting screen 20B of the operation terminal 20 (refer to FIG. 12). The setting screen 20B includes a setting field K1 for setting the number of plants per $3.3\,m^2$ (one tsubo), (target planting density), a setting field K2 for setting a plant interval (planting interval), a setting field K3 for setting ON or OFF of correction processing on the plant interval (which will be described in detail later), and a setting field K4 for setting sensitivity of the correction processing (which is so-called correction sensitivity). For example, if an operator enters the desired number of plants in the setting field K1, the plant interval is set in the setting field K2 in accordance with the number of the plants. For example, if the operator enters "50 plants" in the setting field K1, the plant interval is set to "22.0 cm". In this case, the acquisition processing unit 112 obtains "10 times per 2.2 m" (2.2 m/10 times) as the target number of times. It is noted that the correction sensitivity corresponds to a correction frequency (length of the predetermined distance). Therefore, for example, if the operator changes correction sensitivity (5 steps) from "4/5" to "3/5", the target number of times is changed to "20 times per 4.4 m" (4.4 m/20 times). In this case, the acquisition processing unit 112 obtains "20 times per 4.4 m" as the target number of times. In other words, the vehicle control device 11 executes correction processing on a plant interval every 2.2 m in a case where the correction sensitivity is "4/5", and executes correction processing on a plant interval every 4.4 m in a case where the correction sensitivity is "3/5". The correction frequency decreases as the correction sensitivity decreases.

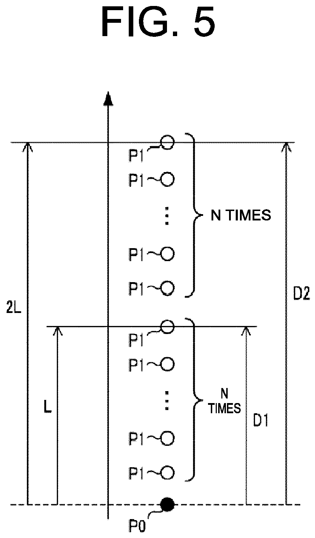

A specific example of planting work according to Embodiment 1 is described below. FIG. 5 shows an example that the target number of times is set to "n time(s) per L (m)" for one work route (process) and that no deviation occurs in planting intervals. In FIG. 5, P0 indicates a work starting position (planting work starting position) and P1 indicates a planting position of seedlings. For example, when an operator operates the planting clutch lever on the work route (straight route R1) to give an instruction to start planting work, the planting processing unit 113 drives (rotates) the work machine 14 to plant a seedling as a first plant. Upon detection of planting of the seedling as the first plant, the setting processing unit 115 sets a position of the work machine 14 at that time to the work starting position P0 of the work route. Thereafter, the planting processing unit 113 repeatedly executes planting processing for planting seedlings n times in each predetermined section of L (m) on the work route. FIG. 5 shows two predetermined sections of L (m) included in one work route.

In the planting processing, the acquisition processing unit 112 obtains a travel distance of the work vehicle 10 at the time when the work vehicle 10 completes the target number of times of planting processing in a predetermined section of a work route. For example, in the example illustrated in FIG. 5, when the work vehicle 10 completes planting processing n time(s) from a work starting position P0, the acquisition processing unit 112 obtains a travel distance D1 (work distance) that the work vehicle 10 has actually traveled. In addition, when the work vehicle 10 completes planting processing (n x 2) time(s) from the work starting position P0, the acquisition processing unit 112 obtains a travel distance D2 (work distance) that the work vehicle 10 has actually traveled. The acquisition processing unit 112 is one example of a first acquisition processing unit and a second acquisition processing unit according to the present invention.

In a case the travel distance D1 coincides with a predetermined distance L corresponding to the target number of times (n time(s)), no deviation occurs in planting intervals in the predetermined section. As well, in a case where the travel distance D2 coincides with a distance of all the sections 2L (twice as long as the predetermined distance L) corresponding to the target number of times (n x 2 time(s)), no deviation occurs in planting intervals in the corresponding predetermined section.

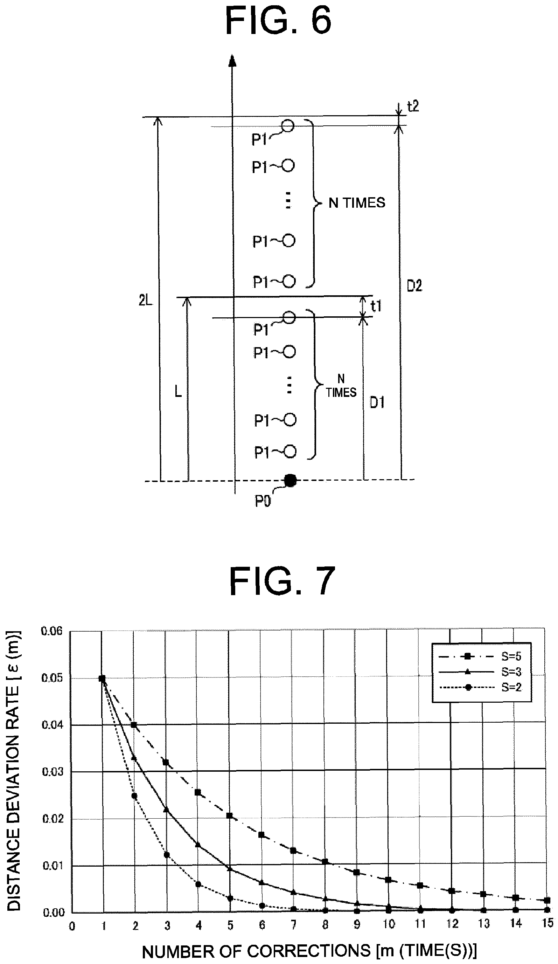

In contrast, FIG. 6 shows an example that the target number of times is set to "n time(s) per L (m)" for one work route (process) and a deviation occurs in planting intervals. In the example illustrated in FIG. 6, a travel distance D1 is less than a predetermined distance L at the time when the work vehicle 10 completes planting processing n times, resulting in a distance difference t1 (= L - D1). As well, a travel distance D2 is less than a distance of all the sections 2L at the time when the work vehicle 10 completes planting processing (n x 2) times, resulting in a distance difference t2 (= 2L - D2). The distance differences t1 and t2 occur, for example, in a case where wheels of the work vehicle 10 are slipped, thereby causing the planting intervals to be deviated. The vehicle control device 11 performs the following correction processing in a case where a deviation in planting intervals occurs. Specifically, the vehicle control device 11 corrects a rotational frequency (hereinafter referred to as a rotational frequency $\omega$ of the planting unit) of the work machine 14 (the planting claw 43 of the planting unit 34) to then correct the planting intervals (plant intervals).

For example, the calculation processing unit 114 calculates a rotational frequency $\omega(\text{min}^{-1})$ of the planting unit by formula (1). The "a" of formula (1) is a correction coefficient, and it is possible to adjust the rotational frequency $\omega$ of the planting unit to correct plant intervals by changing the correction coefficient. In other words, the correction coefficient "a" is a parameter that corrects the rotational frequency of the planting unit (planting claw 43) that plants seedlings in a field F. The correction coefficient "a" is set to "1" at a work starting time. "V (m/min)" is a vehicle speed of the work vehicle 10 and is calculated on the basis of GNSS signals, axle rotational frequencies, estimated slip rates, and the like. "N" is the number of times of planting of the planting claw 43 per one rotation. The target number of times is set to "n time(s) per L (m)".
(Formula 1)

$$\omega = a \cdot \frac{n/L \cdot V}{N} \quad \cdots (1)$$

The calculation processing unit 114 calculates a deviation rate $\varepsilon$ (f) (deviation rate in a distance) corresponding to the distance difference by formula (2). The "f" of formula (2) corresponds to the number of predetermined sections, that is to say, the number of times of updating the above-mentioned target number of times. For example, in the example illustrated in FIG. 6, a first section corresponding to n time(s) at a work starting position P0 is equivalent to "f = 1" and a next section corresponding to n time(s) is equivalent to "f = 2".
(Formula 2)

$$\varepsilon_{(f)} = -\frac{D_{(f)} - f \cdot L}{L} \quad \cdots (2)$$

A deviation rate $\varepsilon$ (1) for a first section (f = 1) corresponding to n time(s) at a work starting position P0 is represented by "- (D1 - L)/L" (= t1/L). A deviation rate $\varepsilon$ (2) for a next section corresponding to n time(s) (f=2) is represented by "- (D2 - 2L)/L" (= t2/L). Thus, the calculation processing unit 114 calculates a distance difference (t1, t2, or the like) between a distance of all the sections that is an integral multiple of a predetermined distance L in accordance with the number of predetermined sections and the travel distance, and divides the distance difference by the predetermined distance to calculate a deviation rate $\varepsilon$. It is noted that as another embodiment, the calculation processing unit 114 may divide the distance difference by the distance of all the sections (f $\times$ L) to calculate a deviation rate $\varepsilon$. In this case, a deviation rate $\varepsilon$ (2) can be represented by "- (D2 - 2L)/2L" (= t2/2L).

The setting processing unit 115 sets a plant interval in a next predetermined section following a predetermined section on a work route on the basis of the predetermined distance and the travel distance. Specifically, the setting processing unit 115 sets the plant interval in the next predetermined section on the basis of the distance difference corresponding to the predetermined section where planting processing has been completed. Specifically, the setting processing unit 115 sets the plant interval so that a deviation rate $\varepsilon$ can be zero or close to zero.

For example, the setting processing unit 115 sets a correction coefficient a so as to extend each plant interval in a case where a travel distance D1 is less than a predetermined distance L. The setting processing unit 115 also sets a correction coefficient a on the basis of a deviation rate $\varepsilon$. Specifically, the setting processing unit 115 calculates a correction coefficient a (f) by the following formula (3). The "S" of formula (3) is a correction level that indicates a correction degree to which the distance deviation (deviation in planting intervals) is eliminated, and is set in advance. As shown in formula (3), the setting processing unit 115 determines the correction coefficient a so as to decrease the deviation rate $\varepsilon$ by 1/S each time the correction coefficient a is updated (each n time(s) of planting processing).
(Formula 3)

$$a_{(f)} = \frac{1 + (\varepsilon_{(f)} - \varepsilon_{(f-1)})}{1 - \varepsilon_{(f)}/S} \cdot a_{(f-1)} \quad \cdots (3)$$

(where $\alpha_0 = 1$, $\varepsilon_0 = 0$)

The vehicle control device 11 calculates a deviation rate $\varepsilon$ (f) as well as updates a correction coefficient a (f) each time planting processing is performed n time(s), and corrects a rotational frequency $\omega$ of the planting unit.

For example, as illustrated in FIG. 7, in a case where the deviation rate is 5 % ($\varepsilon$ (1) = 0.05) at the time of a first update of the correction coefficient a (1), the vehicle control device 11 repeatedly performs the above-mentioned correction processing, so that the deviation rate $\varepsilon$ (f) gradually approaches zero. As illustrated in FIG. 7, when a correction level S is "5", the deviation rate $\varepsilon$ decreases by 1/5 each time n time(s) of planting processing is completed (each correction processing). In addition, in a case where the correction level S is "2", the deviation rate $\varepsilon$ decreases by 1/2 each time n time(s) of planting processing is completed (each correction processing). Thus, as the correction level S gets larger, the rotational frequency $\omega$ of the planting unit (plant interval) is corrected such that the deviation rate $\varepsilon$ approaches zero more gradually. As the correction level S gets smaller, the rotational frequency $\omega$ of the planting unit (plant interval) is corrected such that the deviation rate $\varepsilon$ approaches zero more rapidly.

It is noted that a correction level S may be set by an operator setting operation. For example, a setting screen 20B (refer to FIG. 12) may include a setting field for setting the correction level S. As another embodiment, the vehicle control device 11 may also automatically set a correction level S. For example, the vehicle control device 11 may set the correction level S in accordance with conditions of a field F including soil depth and a slip rate. For example, the vehicle control device 11 sets the correction level S to a smaller value as the soil depth gets deeper, thereby eliminating a distance deviation with the fewer number of corrections. The vehicle control device 11 may also set a correction level S in accordance with correction sensitivity entered by an operator on the setting screen 20B. For example, the vehicle control device 11 sets the correction level S to a smaller value as the correction sensitivity is smaller (weaker), thereby eliminating a distance deviation with the fewer number of corrections.

As described above, the vehicle control device 11 sets a planting interval (plant interval) in a next predetermined section on the basis of a distance difference between a distance of all the sections that is an integral multiple of a predetermined distance in accordance with the number of predetermined sections and a travel distance (work distance) of the work vehicle 10. It is noted that unlike n time(s) of a work distance (distance for each predetermined section), the travel distance is a distance from a work starting position P0 to a position of the work vehicle 10 at the time when the work vehicle 10 completes the target number of times of planting work.

In other words, the vehicle control device 11 sets the planting interval so that actual density which is calculated by dividing the actual number of times of the work vehicle 10 having performing seedlings in a section of the travel distance by the travel distance can approach target density that is calculated by dividing the target number of times (n) by a predetermined distance (L). For example, in the example illustrated in FIG. 6, the vehicle control device 11 sets a planting interval in a next predetermined section (second predetermined section) so that the actual density (n/D1) which is calculated by dividing the actual number of times (n) of the work vehicle 10 having performing seedlings in a section of the travel distance D1 by the travel distance D1 can approach target density (n/L) which is calculated by dividing the target number of times (n) by the predetermined distance (L). The vehicle control device 11 also sets a planting interval in the following predetermined section (third predetermined section) so that the actual density (n x 2/D2) which is calculated by dividing the actual number of times (n x 2) of the work vehicle 10 having performing seedlings in a section of a travel distance D2 by the travel distance D2 can approach target density (n/L).

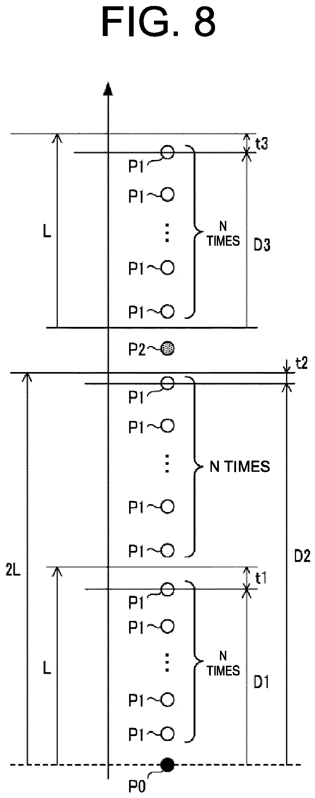

Incidentally, the work vehicle 10 may temporarily suspend planting work while traveling on a work route (straight route R1) and resume it later. In this case, in a case where the planting work of the work vehicle 10 is suspended and resumed on the work route, the vehicle control device 11 sets a planting interval in a next predetermined section following a predetermined section after such work is resumed on the basis of a total deviation rate $\varepsilon$ that is the sum of a deviation rate $\varepsilon$ (pre) before such work is resumed and a deviation rate $\varepsilon$ (f) corresponding to the predetermined section after such work is resumed. For example, as illustrated in FIG. 8, in a case where the work vehicle 10 temporarily suspends planting work at a position P2 and resumes it later, the vehicle control device 11 calculates a total deviation rate $\varepsilon$ that is the sum of a deviation rate $\varepsilon$ (pre) (= - (D2 - 2L)/L (= t2/L)) before such work is resumed and a deviation rate $\varepsilon$ (= - (D3-L)/L (= t3/L)) after such work is resumed. In addition, upon calculating a correction coefficient a in the predetermined section after such work is resumed (refer to the above-mentioned formula (3)), the vehicle control device 11 uses a correction coefficient a (pre) before such work is resumed as an initial value (a (0) = a (pre)) and a deviation rate $\varepsilon$ (pre) before such work is resumed as an initial value ($\varepsilon$ (0) = $\varepsilon$ (pre)). The vehicle control device 11 corrects a rotational frequency $\omega$ of the planting unit (plant interval) by calculating the correction coefficient a on the basis of the total deviation rate $\varepsilon$.

Thus, the vehicle control device 11 records the deviation rate $\varepsilon$ and the correction coefficient a at the time of such work being suspended to hand over them to correction processing after such work is resumed so that planting density within one process can be controlled even in a case the planting work is temporarily suspended and resumed on a work route (one process). Specifically, the vehicle control device 11 records the last deviation rate ($\varepsilon$ (pre)) and the last correction coefficient (a (pre)) that has been calculated when planting work is temporarily suspended within one process. When the planting work is next resumed, the vehicle control device 11 calculates in the correction processing the total deviation rate that is the sum of the deviation rate $\varepsilon$ (pre) before such work is resumed and the deviation rate $\varepsilon$ after such

work is resumed, and further, calculates a correction coefficient a using an initial value (a (pre)) of the correction coefficient a and an initial value (ε (pre)) of the deviation rate ε.

In a case where a work route before such work is resumed and a work route after such work is resumed are routes in the same work process (for example, one straight route R1), the vehicle control device 11 also sets a planting interval in a next predetermined section following a predetermined section after such work is resumed on the basis of the total deviation rate. It is preferable that the vehicle control device 11 should not take over the deviation rate ε in a case where the work route is shifted from one straight route R1 to a next straight route R1 (for example, in a case where the work route is shifted from an outward route to an inward route), that is to say, in a case where the work process is shifted to a different route. For example, the vehicle control device 11 may be configured to calculate an angle at a work starting time that a vehicle azimuth forms with respect to a working direction and not to use a recorded value of the deviation rate ε in a case where the angle is above a threshold value. In the target route R illustrated in FIG. 3, the vehicle azimuth is deviated from the working direction when the work vehicle 10 starts traveling on the turning route R2, so that the angle is above a threshold value in the vehicle control device 11. In this case, the vehicle control device 11 resets a deviation rate ε calculated in the last straight route R1 in planting work in a straight route R1 following the turning route R2 to perform correction processing.

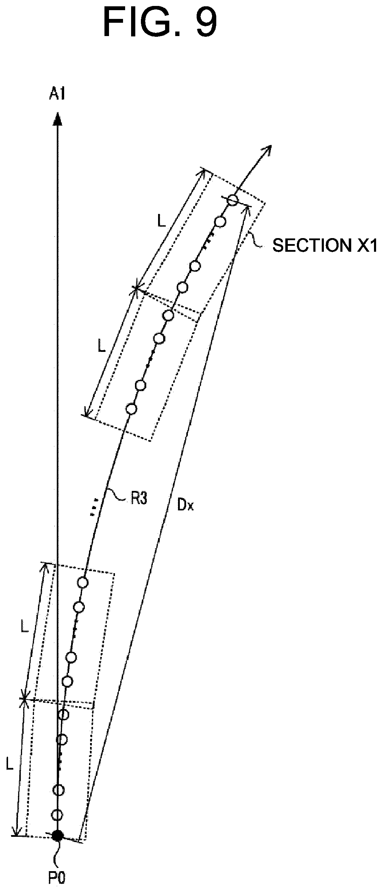

Furthermore, a target route R may include a nonlinear route on a work route for planting work. FIG. 9 shows one example of planting work on a nonlinear route. In FIG. 9, A1 shows a traveling direction of the work vehicle 10 at a work stating time of planting work, and R3 shows a work route of the work vehicle 10. The work route R3 is a nonlinear route (curved route). In this case, when the vehicle control device 11 performs the correction processing after completing planting work, for example, in a predetermined section X1, a travel distance Dx illustrated in FIG. 9, which is calculated as a distance from the work starting position P0 to a position of the work vehicle 10, deviates from a distance (curve distance) that the work vehicle 10 has actually traveled on the work route R3. As a result, the vehicle control device 11 is not able to set a proper correction coefficient a.

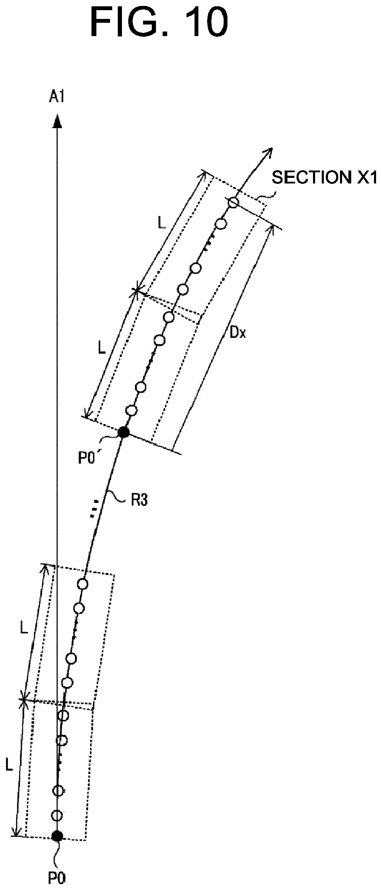

Therefore, it is preferable that the vehicle control device 11 should reset a work starting position P0 in each of a plurality of predetermined sections in a case where the work route is a nonlinear route. For example, as illustrated in FIG. 10, the vehicle control device 11 resets a work starting position P0' after planting work in a plurality of predetermined sections is completed. This enables the vehicle control device 11 to calculate, for example, in a predetermined section X1, a travel distance Dx that approximates to a distance which the work vehicle 10 has actually traveled on the work route R3.

Thus, the vehicle control device 11 can accurately calculate the travel distance Dx by periodically updating a reference position (work starting position P0) for calculating the travel distance Dx. It is noted that the vehicle control device 11 may execute updating the work starting position P0 when update processing of a correction coefficient a is performed a predetermined number of times. In addition, upon updating the work starting position P0, the vehicle control device 11 may hand over to a next correction processing a deviation rate ε and a correction coefficient a that have been calculated in correction processing before such updating.

It is noted that in a case of a traveling mode in which the work vehicle 10 travels automatically only in a straight route R1, the vehicle control device 11 does not execute update processing of a work starting position P0. Moreover, in a case of a traveling mode in which the work vehicle 10 travels automatically in a straight route R1 and a headland region that includes a nonlinear route, the vehicle control device 11 automatically executes update processing of a work starting position P0 for planting work in the headland region. In a case where a region for straight traveling work and a headland region has been set as work regions in advance, the vehicle control device 11 may also be configured not to update a work starting position P0 in the region for straight traveling work.

[Operation Terminal 20]

As illustrated in FIG. 1, the operation terminal 20 is an information processing device that includes an operation control unit 21, a storage unit 22, an operation display unit 23, and a communication unit 24. The operation terminal 20 may be constituted of a portable terminal such as a tablet terminal and a smartphone.

The communication unit 24 is a communication interface that connects the operation terminal 20 to the communication network N1 by a wire or wireless means and that executes data communication with one or a plurality of external devices such as the work vehicle 10 via the communication network N1 in accordance with a predetermined communication protocol.

The operation display unit 23 is a user interface that includes a display unit such as a liquid crystal display or an organic EL display that displays various pieces of information, and an operation unit such as a touch panel, a mouse, or a keyboard, which receives operations. On an operation screen displayed on the display unit, an operator can operate the operation unit to register various pieces of information (such as work vehicle information, field information, and work information, which will be described later). For example, the operator performs an operation to register a field F to be worked for at the operation unit.

The operator can also operate the operation unit to provide a work starting instruction, a work stopping instruction, and the like to the work vehicle 10. Furthermore, in a place away from the work vehicle 10, the operator can grasp a traveling state in which the work vehicle 10 travels automatically in a field F in accordance with a target route R by a traveling trajectory displayed on the operation terminal 20.

The storage unit 22 is a non-volatile storage unit such as an HDD or an SSD that stores various pieces of information. The storage unit 22 stores a control program for causing the operation control unit 21 to execute a predetermined control processing. For example, the control program is recorded in a computer-readable recording medium such as a flash ROM, an EEPROM, a CD or a DVD in a non-transitory manner, and is read by a predetermined reading device (not illustrated) to be stored in the storage unit 22. It is noted that the control program may be downloaded from a server (not illustrated) to the operation terminal 20 via the communication network N1 and be stored in the storage unit 22.

Further, a dedicated application for causing the work vehicle 10 to travel automatically is installed in the storage unit 22. The operation control unit 21 activates the dedicated application and performs setting processing of various pieces of information with regard to the work vehicle 10, generation processing of a target route R for the work vehicle 10, and an automatic traveling instruction provided to the work vehicle 10.

The storage unit 22 also stores data such as work vehicle information that is information with regard to the work vehicle 10 and target route information which is information with regard to the target route R. The work vehicle information includes information such as a vehicle number and a vehicle model for each work vehicle 10. The vehicle number is identification information of the work vehicle 10. The vehicle model is a model of the work vehicle 10.

In addition, the storage unit 22 may store the work vehicle information with regard to one work vehicle 10 or may store the work vehicle information with regard to a plurality of the work vehicles 10. For example, in a case where a particular operator owns a plurality of the work vehicles 10, the work vehicle information with regard to each work vehicle 10 is stored in the storage unit 22.

The target route information includes information such as a route name, a field name, an address, a field area, and a working time for each target route R. The route name is a route name of the target route R generated at the operation terminal 20. The field name is a name of the field F to be worked for where the target route R has been set. The address is an address of the field F, and the field area is an area of the field F. The working time is a time required for work in the field F by the work vehicle 10.

It is noted that the storage unit 22 may store the target route information with regard to one target route R, or may store the target route information with regard to a plurality of target routes R. For example, in a case where a particular operator generates a plurality of target routes R for one or a plurality of fields F owned by the operator, the target route information with regard to each target route R is stored in the storage unit 22. It is noted that one target route R may be set in one field F or a plurality of target routes R may be set in one field F.

As another embodiment, some or all of the information such as the work vehicle information and the target route information may be stored in a server accessible from the operation terminal 20. An operator may perform an operation for registering the work vehicle information and the target route information in the server (for example, a personal computer, a cloud server, and the like).

The operation control unit 21 has control apparatuses such as a CPU, a ROM, and a RAM. The CPU is a processor that executes various pieces of arithmetic processing. The ROM is a non-volatile storage unit that previously stores a control program such as a BIOS and an OS for causing the CPU to execute various pieces of arithmetic processing. The RAM is a volatile or non-volatile storage unit that stores various pieces of information and that is used as a transient storage memory for various pieces of processing to be executed by the CPU. The operation control unit 21 controls the operation terminal 20 by causing the CPU to execute various kinds of control programs previously stored in the ROM or the storage unit 22.

As illustrated in FIG. 1, the operation control unit 21 includes various kinds of processing units such as a setting processing unit 211 and an output processing unit 212. The operation control unit 21 functions as various kinds of the processing units by causing the CPU to execute various pieces of processing in accordance with the control programs. Further, some or all of the processing units may be constituted of an electronic circuit. It is noted that the control program may be a program for causing a plurality of processors to function as the processing units.

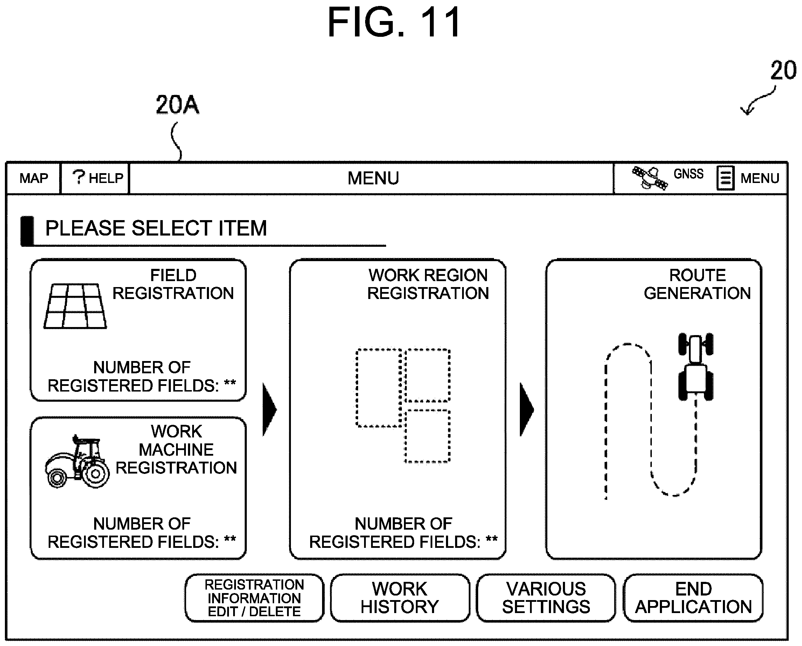

The setting processing unit 211 sets information with regard to the work vehicle 10 (hereinafter referred to as work vehicle information), information with regard to a field F (hereinafter referred to as field information), and information with regard to the specific way how to perform work (hereinafter referred to as work information). The setting processing unit 211 receives setting operations from an operator, for example, on the setting screen 20A illustrated in FIG. 11, and registers each setting information.

Specifically, the setting processing unit 211 sets through a registration operation that is performed at the operation terminal 20 by an operator corresponding information including a model of the work vehicle 10, a position where the positioning antenna 164 is mounted on the work vehicle 10, a type of the work machine 14, a size and a shape of the work machine 14, a position of the work machine 14 with respect to the work vehicle 10, a travel speed and a rotational frequency of an engine during work of the work vehicle 10, and a travel speed and a rotational frequency of an engine during turning of the work vehicle 10.

The setting processing unit 211 also sets corresponding information including a position and a shape of a field F, a travel starting position St at which such travel is started, a travel stopping position G at which such travel is finished, and a traveling direction (working direction) through a registration operation that is performed at the operation terminal 20.

For example, one operator who rides on the work vehicle 10, drives so as to circle once around an outer periphery of the field F, and records a transition of position information of the positioning antenna 164 at that time, so that the information with regard to the position and shape of the field F can be obtained automatically. Further, the position and shape of the field F can also be obtained on the basis of a polygon as a result that an operator operates the operation terminal 20 that displaying a map thereon to designate a plurality of points on the map. A region specified by the obtained position and shape of the field F is a region (travel region) in which the work vehicle 10 can be caused to travel.

The setting processing unit 211 is configured so as to be able to set work information including presence or absence of cooperative work performed by a work vehicle 10 (unmanned rice transplanter) and a manned work vehicle 10, the number of skips, which is the number of work routes to be skipped in a case where the work vehicle 10 turns in a headland, a width of the headland, and a width of the land not to be worked for.

For example, the setting processing unit 211 sets a work region for which actual work is to be performed in the registered field F. For example, when an operator selects "work region registration" on the setting screen 20A (refer to FIG. 11) and selects a field F in which a work region is to be registered, the setting processing unit 211 displays the registration screen (map screen) for registering a travel starting position St and a travel stopping position G. The operator registers the travel starting position St and the travel stopping position G at any location in the field F on the registration screen.

On the basis of the individual setting information, the setting processing unit 211 also generates a target route R on which the work vehicle 10 is caused to travel automatically in the field F. For example, when an operator selects "route generation" on the setting screen 20A (refer to FIG. 11), the setting processing unit 211 displays a registration screen (not illustrated) for generating a route. On the registration screen, the operator registers individual information including a field F, the work machine 14, a turning method, a headland region, a vehicle speed, and an engine rotation, and then, perform a route generation instruction. Upon obtaining the route generation instruction, the setting processing unit 211 generates the target route R on the basis of a travel starting position St, a travel stopping position G, and the individual information.

For example, as illustrated in FIG. 3, the setting processing unit 211 generates a target route R that includes a travel starting position St, a travel stopping position G, a straight route R1, and a turning route R2. The setting processing unit 211 registers the generated target route R in association with a field F.

In addition, upon generating a target route R, the setting processing unit 211 displays the setting screen 20B for setting work conditions related to planting work. On the setting screen 20B, an operator sets the number of plants (planting density), plant interval (planting interval), ON/OFF of correction processing in plant intervals, and correction sensitivity. For example, the operator enters the desired number of plants in the setting field K1. The setting processing unit 211 sets a plant interval on the basis of the number of the plants that has been entered. Furthermore, on the basis of the correction sensitivity entered by the operator, the setting processing unit 211 sets a predetermined distance L that is a section subject to the correction processing, and sets the number of times of planting (the target number of times (n)) at the predetermined distance. It is noted that the operator may enter a plant interval in the setting field K2 instead of the number of plants.

The output processing unit 212 outputs route data of a target route R and information on work conditions (work condition information) to the work vehicle 10. For example, when an operator selects a field F to be worked for and a work route (target route R) and performs a work starting operation, the output processing unit 212 outputs route data on the target route R corresponding to a field F and the work condition information to the work vehicle 10.

Upon receiving route data of the target route R generated from the operation terminal 20, the work vehicle 10 stores the data in the storage unit 12. In addition, the work vehicle 10 starts traveling automatically in response to the operator's work starting instruction in a case where the travel starting conditions are satisfied. While the work vehicle 10 travels automatically, the operator can grasp a traveling state of the work vehicle 10 in a field F at the operation terminal 20.

In addition, upon obtaining the work condition information, the work vehicle 10 performs correction processing for correcting a planting interval (plant interval) on the basis of the work condition information.

It is noted that the operation terminal 20 may be accessible to a web site for agricultural support services (agricultural support site) provided by a server (not illustrated) via the communication network N1. In this case, the operation control unit 21 executes a browser program, so that the operation terminal 20 can function as an operation terminal for the server. The server includes the above-mentioned respective processing units, which perform each processing.

[Planting work processing according to Embodiment 1]

One example with regard to the planting work processing executed by the work system 1 will be described below with reference to FIG. 13.

It is noted that the present invention may be regarded as an invention of a planting work method for performing one or a plurality of steps included in the planting work processing. It may also be possible to properly omit one or a plurality of steps included in the planting work processing. It is also noted that each step in the above planting work processing may be executed in a different order as long as the same action effect is brought about. Furthermore, although a case where the vehicle control device 11 executes each step in the planting work processing is described here as an example, a planting work method in which one or a plurality of processors execute each step in the planting work processing in a distributed manner is also considered as another embodiment.

First, in step S11, the vehicle control device 11 of the work vehicle 10 obtains the target number of times of planting work included in work condition information. Specifically, the vehicle control device 11 obtains the target number of times that is "n time(s) per L (m)" (refer to FIG. 6).

Next, in step S12, the vehicle control device 11 determines whether or not a work starting instruction has been obtained from the operation terminal 20. Upon receiving the work starting instruction (S12: Yes), the vehicle control device 11 shifts the processing to step S13. The vehicle control device 11 stands by until obtaining the work starting instruction (S12: No).

In step S13, the vehicle control device 11 sets a work starting position P0. For example, when an operator operates a planting clutch lever and gives an instruction to start planting work, the vehicle control device 11 drives (rotates) the work machine 14 to plant a seedling as a first plant, and sets, as the work starting position P0, a position of the work machine 14 at the time when planting of the first plant has been detected.

As another embodiment, the vehicle control device 11 may set the work starting position P0 on the basis of a preset position (a position on a virtual work straight line L1 according to [Embodiment 2]).

As another embodiment, the vehicle control device 11 may set, as the work starting position P0, a position of the work machine 14 at the time when a rotational movement (rotational phase) of the planting unit (planting claw 43) has been detected by the rotation sensor 17.

Next, in step S14, the vehicle control device 11 performs planting processing. Specifically, the vehicle control device 11 performs planting processing in accordance with the target number of times that is "n time(s) per L (m)" on a work route. Specifically, the vehicle control device 11 outputs a rotational frequency ω of the planting unit corresponding to such target number of times to the planting driving device 18 to drive (rotate) the work machine 14 (planting unit).

Next, in step S15, the vehicle control device 11 determines whether or not the number of times of planting has reached the target number of times. For example, in an example illustrated in FIG. 6, the vehicle control device 11 determines whether or not the number of times of planting has reached n time(s) from the work starting position P0. When such number of times of planting reaches such target number of times (S 15: Yes), the vehicle control device 11 shifts the processing to step S16. On the other hand, in a case where such number of times of planting has not reached such target number of times (S15: No), the vehicle control device 11 shifts the processing to step S19.

In step S16, the vehicle control device 11 obtains (calculates) a travel distance (work distance) of the work vehicle 10. Specifically, the vehicle control device 11 calculates a distance from the work starting position P0 to a position of the work vehicle 10 at the time of completing n time(s) of planting processing. For example, in an example illustrated in FIG. 6, the vehicle control device 11 obtains a travel distance D1.

Next, in step S17, the vehicle control device 11 determines whether or not the travel distance coincides with a distance of all the sections corresponding to the predetermined distance. For example, the travel distance D1 illustrated in FIG. 6 corresponds to a first section, and therefore, the distance of all the sections is a predetermined distance L. In this case, the vehicle control device 11 determines whether or not the travel distance D1 and the predetermined distance L coincide with each other. In a case where the travel distance and the distance of all the sections coincide with each other (S17: Yes) (refer to FIG. 5), the vehicle control device 11 shifts the processing to step S19. On the other hand, in a case where the travel distance and the distance of all the sections do not coincide with each other (S17: No) (refer to FIG. 6), the vehicle control device 11 shifts the processing to step S18.

In step S18, the vehicle control device 11 determines that there is a deviation in planting intervals (plant intervals) to perform correction processing for correcting the planting intervals.

Specifically, the vehicle control device 11 calculates a distance difference t1 (refer to FIG. 6) between a travel distance D1 and a predetermined distance L, and calculates a deviation rate $\varepsilon$ (1) corresponding to the distance difference t1 by the formula (2). The vehicle control device 11 calculates "-(D1 - L)/L" (= t1/L) as the deviation rate $\varepsilon$ (1). Next, the vehicle control device 11 determines a correction coefficient a (1) on the basis of the deviation rate $\varepsilon$ (1) by the formula (3). Next, the vehicle control device 11 calculates a rotational frequency ω of the planting unit using the correction coefficient a (1) by the formula (1).

In step S19, the vehicle control device 11 determines whether or not the work vehicle 10 has reached the travel stopping position G. For example, the vehicle control device 11 terminates the processing when the work vehicle 10 reaches the travel stopping position G (S19: Yes). In a case where the work vehicle 10 has not reached the travel stopping position G (S19: No), the vehicle control device 11 shifts the processing to step S14. It is noted that the vehicle control device 11 may terminate the processing in a case of receiving a work stopping instruction from an operator.

For example, in a case where the vehicle control device 11 corrects the rotational frequency ω of the planting unit on the basis of the correction coefficient a (1), the vehicle control device 11 outputs a corrected rotational frequency ω of the planting unit to the planting driving device 18 to drive (rotate) the work machine 14 (planting unit) in step S14.

As a result, the work machine 14 performs planting work in accordance with the corrected rotational frequency ω of the planting unit in a next predetermined section. In the example illustrated in FIG. 6, when the number of times of planting reaches n time(s) (S15: Yes), the vehicle control device 11 obtains a travel distance D2 as a distance from the work starting position P0 to a position of the work vehicle 10 at the time of completing n time(s) of planting processing in step S16. The vehicle control device 11 determines whether or not the travel distance D2 and a distance of all the sections 2L (which is twice as long as the predetermined distance L) coincide with each other (S17), and in a case where the travel distance and the distance of all the sections do not coincide with each other, the vehicle control device 11 determines that there is a deviation in planting intervals (plant intervals) to perform correction processing for correcting the planting intervals (S18).

Here, the vehicle control device 11 calculates a distance difference t2 between the travel distance D2 and the distance of all the sections 2L, and calculates a deviation rate ε (2) corresponding to the distance difference t2 using the formula (2). The vehicle control device 11 calculates "-(D2 - 2L)/L" (= t2/L) as the deviation rate ε (2). Next, the vehicle control device 11 determines a correction coefficient a (2) on the basis of the deviation rate ε (2) using the formula (3). Next, the vehicle control device 11 calculates a rotational frequency ω of the planting unit using the correction coefficient a (2) by the formula (1).

Thus, the vehicle control device 11 corrects the planting intervals by adjusting the correction coefficient a and controlling the rotational frequency ω of the planting unit in a case where the travel distance after completing the target number of times of planting work deviates from the distance of all the sections in accordance with the predetermined distance.

It is noted that while the number of times of planting work do not reach the target number of times of planting work on a work route (S15: No), the vehicle control device 11 executes planting processing in accordance with a rotational frequency ω of the planting unit that is calculated by the formula (1) on the basis of a set correction coefficient a.

The vehicle control device 11 continues the processing (S14 to S18) until the work vehicle 10 arrives at the travel stopping position G (S 19: No). The vehicle control device 11 performs the planting work processing as described above.

As described above, the work system 1 according to Embodiment 1 supplies agricultural materials (seedlings, seeds, fertilizers, chemical agents, and the like) to a field F by the work vehicle 10. The work system 1 also obtains the target number of times of supplying agricultural materials per a predetermined distance on a work route, obtains a travel distance of the work vehicle 10 at the time when the work vehicle 10 completes the target number of times of supplying the agricultural materials in a first predetermined section of the work route, and sets a supply interval of the agricultural materials in a second predetermined section following the first predetermined section on the work route on the basis of the predetermined distance and the travel distance.

Thus, unlike such a configuration that plant intervals are controlled so as to be constant throughout an entire field, the work system 1 has a configuration so as to control the supply intervals (planting intervals) so that planting density within a certain area can satisfy a target value. Specifically, the work system 1 detects the number of plants in accordance with a calculated area and adjusts a rotational frequency ω of the planting unit in accordance with the amount of deviation from a target planting density (the number of plants to be planted).

According to the above- mentioned configuration, for example, in a case where planting density (the number of plants to be planted) in the first predetermined section becomes less than a target value, the planting density can be increased in the second predetermined section, resulting in being able to bring the planting density and a supply amount close to the target values when an entire field is viewed.

In addition, in the work system 1, the vehicle control device 11 calculates a travel distance (work distance) from a work starting position P0 and the number of times of planting from the work starting position P0. It is noted that the vehicle control device 11 detects a rotational phase of the planting unit with the rotation sensor 17, resulting in being capable of detecting the number of times of planting per a travel distance (planting density), which was not be able to be accurately determined with slip rate information alone.

Furthermore, in the work system 1, the vehicle control device 11 compares actual planting density after planting work with target planting density set in advance by an operator, and corrects a rotational frequency ω of the planting unit so as to bring the actual planting density close to the target planting density. The vehicle control device 11 repeats this correction processing for each predetermined distance or each number of times of planting, which have been set in advance. The target value of planting density is compared with the actual planting density to control the rotational frequency ω of the planting unit, thereby being capable of making the actual planting density come close to the target planting density. According to such a configuration to control a rotational frequency ω of the planting unit for each predetermined distance or each number of times of planting, which have been set in advance, the work system 1 can be built up inexpensively since control for each plant interval is not required as in the conventional configuration.

Additionally, in the work system 1, in a case of completing planting work, the vehicle control device 11 records a deviation rate ε and a correction coefficient a at the time of such completion to store until the target planting density is changed or the target number of times and the predetermined distance, which have been set in advance, is changed. The vehicle control device 11 also uses the stored correction coefficient a as a correction coefficient a when such work is resumed. In the correction processing after such work is resumed, the vehicle control device 11 uses a total deviation rate ε that is the sum of a deviation rate ε before such work is resumed and a deviation rate ε after such work is resumed. This makes it possible to obtain planting density close to a target value from a work starting time by taking over the deviation rate ε and the correction coefficient a in a case where a deviation rate ε is always deviated in either high or low due to machine variation, and the like. It is also possible to control average planting density of an entire field by taking over the deviation rate ε. It is noted that the vehicle control device 11 may reset the stored deviation rate ε and correction coefficient a in a case such work is resumed in a direction different from the last work.

Moreover, In the work system 1, the vehicle control device 11 may update a work starting position P0 when update processing of a deviation rate ε and a correction coefficient a is performed the preset number of times after planting work is started. In this case, the vehicle control device 11 stores the deviation rate ε and the correction coefficient a until target planting density is changed or the target number of times and a predetermined distance, which have been set in advance, are changed, and correction processing after such changes uses the stored deviation rate ε and correction coefficient a. It is noted that the vehicle control device 11 uses in the correction processing after such changes a total deviation rate that is the sum of a deviation rate ε before such change and a deviation rate ε after such change. This makes it possible to control planting density with high precision by calculating a travel distance (work distance) as a broken line route each at regular interval (refer to FIG. 10) even at the time of work on a work route that is not a straight route, such as in a headland region.

[Other configuration examples of Embodiment 1]

In the embodiment described above, the vehicle control device 11 is configured so as to calculate a distance deviation between a travel distance (work distance) of the work vehicle 10 at the time when the number of times of planting reaches the target number of times as n time(s) and a predetermined distance (distance of all the sections) corresponding to such target number of times, and to perform correction processing for correcting planting intervals in a case where a distance deviation occurs.

As another configuration example, the vehicle control device 11 may determine whether or not the number of times of actual planting (the number of times of actual work) at the time when the work vehicle 10 travels for a predetermined distance, which have been set in advance, (planting work) reaches the target number of times as n time(s), and to perform correction processing for correcting planting intervals in a case where there is a deviation (difference in the number of times) between such number of times of actual work and such target number of times.

In this configuration example, the vehicle control device 11 calculates a deviation rate ε (f) (deviation rate in the number of times) corresponding to a difference between the number of times of actual work X and the target number of times n (difference in the number of times) using formula (4). The "f" in formula (4) corresponds to the number of predetermined sections, that is to say, the number of times of updating the target number of times.

(Formula 4)

$$\varepsilon_{(f)} = -\frac{X_{(f)} - n}{n} \quad \cdots (4)$$

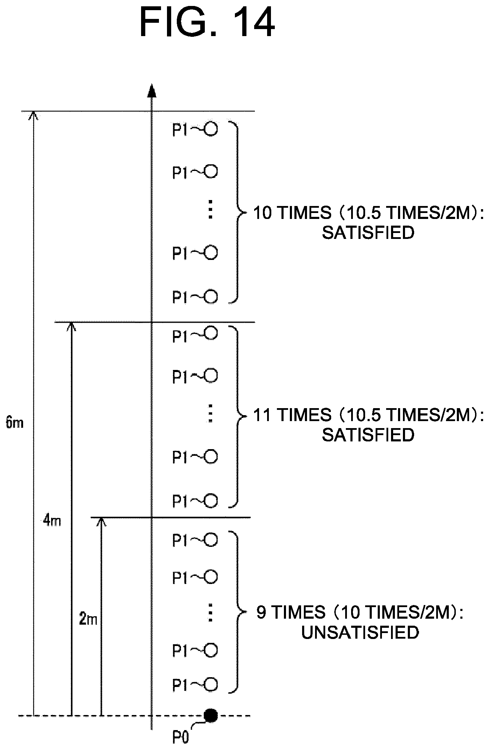

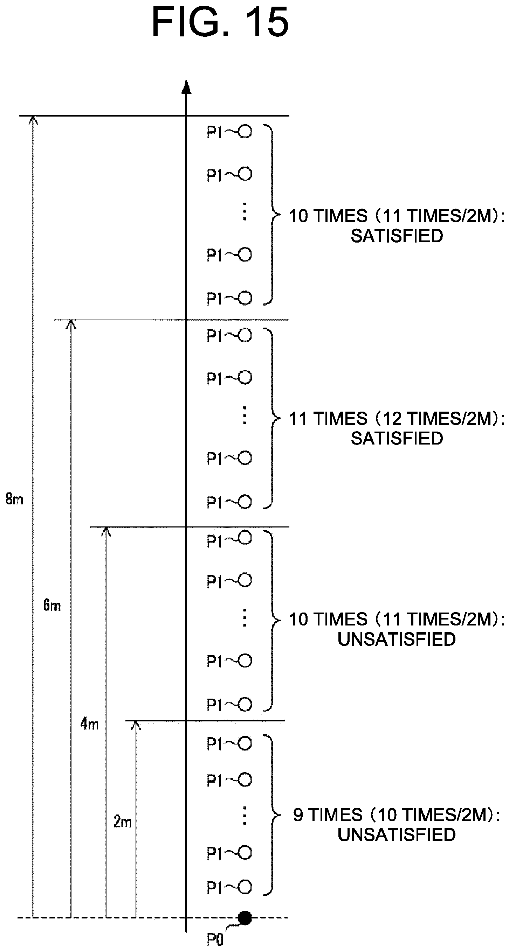

FIGS. 14 and 15 illustrate one example of correction processing. Here, it is assumed that "10 times per 2 m" is set as the target number of times. As illustrated in FIG. 14, the number of times of actual work amount to "9 times" and has not reached the target number of times as "10 times" at the time when the work vehicle 10 travels a predetermined distance of 2 m in a first predetermined section from a work starting position P0. In this case, the vehicle control device 11 calculates "0.1" (= - (9 - 10)/10) as a deviation rate ε (1) and determines a correction coefficient a (1) using the deviation rate ε (1) by the formula (3). Then, the vehicle control device 11 calculates a rotational frequency ω of the planting unit using a correction coefficient a (1) by the formula (1). For example, the vehicle control device 11 outputs the rotational frequency ω of the planting unit that performs "10.5 times per 2 m" of a planting movement. The work vehicle 10 performs planting work on the basis of the corrected rotational frequency ω of the planting unit in a next predetermined section. As a result, the number of times of actual work in that predetermined section amounts to "11 times" at the time when the work vehicle 10 travels 2 m in the next predetermined section, and the sum with the number of times of the first actual work amounts to 20 times, which coincides with the target number of times for 4 m as "20 times". When the number of times of the actual work coincides the target number of times, the vehicle control device 11 omits the correction processing and maintains the rotational frequency ω of the planting unit (" 10.5 times per 2 m") to shift the processing to the next predetermined section.

In the example illustrated in FIG. 15, the number of times of actual work amounts to "9 times" at the time when the work vehicle 10 travels a predetermined distance of 2 m in a first predetermined section from a work starting position P0, which does not reach the target number of times. In this case, the vehicle control device 11 calculates "0.1" as a deviation rate ε (1) and determines a correction coefficient a (1) using the deviation rate ε (1) by the formula (3). Then, the vehicle control device 11 calculates a rotational frequency ω of the planting unit using a correction coefficient a (1) by the formula (1). For example, the vehicle control device 11 outputs the rotational frequency ω of the planting unit that performs "11 times per 2 m" of a planting movement. The work vehicle 10 performs planting work on the basis of the corrected rotational frequency ω of the planting unit in a next predetermined section. As a result, the number of times of the actual work for that predetermined section amounts to "10 times" at the time when the work vehicle 10 travels 2 m in the next predetermined section, and the sum with the number of times of the first actual work amounts to 19 times, which does not reach the target number of times for 4 m as "20 times". In this case, the vehicle control device 11 calculates "0.05" (= - (19 - 20)/10) as a deviation rate ε (2) and determines a correction coefficient a (2) using a deviation rate ε (2) by the formula (3). Then, the vehicle control device 11 calculates a rotational frequency ω of the planting unit using a correction coefficient a (2) by the formula (1). For example, the vehicle control device 11 outputs a rotational frequency ω of the planting unit that performs "12 times per 2 m" of a planting movement. The work vehicle 10 performs planting work on the basis of the corrected rotational frequency ω of the planting unit in a next predetermined section. As a result, the number of times of the actual work for that predetermined section amounts to "11 times" at the time when the work vehicle 10 travels 2 m in the next predetermined section, and the sum from the number of times of the first actual work amounts to 30 times, which coincides with the target number of times for 6 m as "30 times". When the number of times of the actual work coincides the target number of times, the vehicle control device 11 omits the correction processing and maintains the rotational frequency ω of the planting unit to shift the processing to the next predetermined section.

Here, in a case where the number of times of the actual work coincides with the target number of times, the vehicle control device 11 may correct the rotational frequency ω of the planting unit when the number of times of the actual work may exceed the target number of times in the next predetermined section. For example, as illustrated in FIG. 15, the vehicle control device 11 may output a rotational frequency ω of the planting unit that performs "11 times per 2 m" of a planting movement in a predetermined section of 6 m to 8 m. As a result, the number of times of actual work for that predetermined section amounts to "10 times" at the time when the work vehicle 10 travels 2 m in the predetermined section, and the sum from the number of times of the first actual work amounts to 40 times, which coincides with the target number of times for 8 m as "40 times".

In this way, the vehicle control device 11 performs planting processing while adjusting the target number of times for each predetermined section (predetermined distance).

As described above, the work system 1 according to another configuration example obtains the target number of times of supplying agricultural materials per a predetermined distance on a work route, obtains the number of times of actual work of the work vehicle 10 having performed supplying agricultural materials in a first travel section of the predetermined distance, and sets a supply interval of the agricultural materials in a second predetermined section following the first predetermined section on the basis of a difference between the target number of times and the number of times of the actual work.

In the work system 1 according to Embodiment 1, the vehicle control device 11 may be configured so as to calculate a deviation rate ε on the basis of a travel distance in a case of having performed the preset target number of times of work (first configuration), or may be configured so as to calculate a deviation rate ε on the basis of the number of times of actual work in a case where the work vehicle 10 travels a preset travel distance (second configuration).

In addition, the work system 1 may be selectable by one operator between the first configuration and the second configuration. The vehicle control device 11 may also apply either of the first configuration and the second configuration on the basis of information such as conditions of a field F, route information on a target route R, and planting density as a target value.

[Second embodiment]

By the way, with regard to planting work for planting seedlings in a field F, there is known a technique for aligning a planting position (work starting position) in each work route after turning in a headland region. However, since the conventional technique shows a configuration to align a work ending position on a work route on current travel with a work starting position in a next work route, it is expected that there may be a deviation among work starting positions on the respective work routes in a case of viewing an entire field. In contrast, a work system 1 according to Embodiment 2 has a configuration so as to be able to align a work starting position of each work route in an entire field.

The following will be described with regard to the work system 1 according to Embodiment 2. In the following, descriptions will be omitted with regard to configurations identical to those of the work system 1 according to Embodiment 1.

In a vehicle control device 11 according to Embodiment 2, an acquisition processing unit 112 obtains a plant interval (planting interval) of agricultural materials (for example, seedlings). For example, the acquisition processing unit 112 obtains a plant interval from information on work condition (work condition information) with regard to planting work set on a setting screen 20B (refer to FIG. 12). In the example illustrated in FIG. 12, the acquisition processing unit 112 obtains "22.0 cm" as a plant interval.

A setting processing unit 115 sets a work starting reference position Px, which is a reference position for setting a work starting position to start planting work. The work starting reference position Px is a reference position in a case of planting work in a field F, and is set at one location with respect to the field F. Specifically, the setting processing unit 115 sets the work starting reference position Px to a position of the work vehicle 10 (work machine 14) at the time when planting work is started at any given timing. For example, on a work route for one process (straight route R1), when an operator operates a planting clutch lever and gives an instruction to start planting work, a planting processing unit 113 drives (rotates) the work machine 14 to plant a seedling as a first plant. Upon detection of planting of the seedling as the first plant on the work route for one process, the setting processing unit 115 sets a position of the work machine 14 at that time to the work starting reference position Px. The setting processing unit 115 stores information on the set work starting reference position Px in a storage unit 12 in association with the field F.

It is noted that the work starting reference position Px is not limited to a position where the seedling as the first plant has actually been planted. For example, the setting processing unit 115 may set, as the work starting reference position Px, a position of the work machine 14 at the time when an instruction to start planting work is obtained.

In addition, the setting processing unit 115 sets the work starting reference position Px at a position where seedlings are first planted on a work route in which to first perform planting work among a plurality of work routes.

As another embodiment, the setting processing unit 115 may set the work starting reference position Px on the basis of behavior information of the work vehicle 10. For example, the setting processing unit 115 sets the work starting reference position Px on the basis of the behavior information including, in addition to position information of the work vehicle 10, working direction (traveling direction) of the work vehicle 10 includes forward and backward, a work speed of planting work, a posture angle of the work vehicle 10, lowering and raising of the work machine 14, ON/OFF of driving of the work machine 14, a driving rotational speed of the work machine 14, work/non-work of a drawing marker device, angles of steering wheels that change a vehicle azimuth, information on either presence or absence of loading of agricultural materials on the work vehicle 10 or the work machine 14, or a plurality of pieces of information.

For example, the setting processing unit 115 sets, as the work starting reference position Px, a position where seedlings are to be first planted after a state where seedlings are loaded on the work vehicle 10 from a state where no seedlings are loaded on the work vehicle 10. For example, in a case where a posture (inclination) of the work vehicle 10, a vehicle azimuth of the work vehicle 10 or the like changes in the vicinity of an entrance or exit of a field F, the setting processing unit 115 determines that the work vehicle 10 has entered the field F from the outside the field F to set, as the work starting reference position Px, a position where seedlings is to be first planted after detecting such change. Thus, according to this configuration of setting the work starting reference position Px on the basis of changes in a specific behavior of the work vehicle 10, an operator does not have to obtain a shape of the field F in advance to determine the work starting reference position Px, which results in improvement on workability.

Upon setting a work starting reference position Px, the setting processing unit 115 sets a work starting position Ps corresponding to each of the plurality of work routes (straight route R1) on the basis of the plant interval and the work starting reference position Px obtained by the acquisition processing unit 112. Specifically, the setting processing unit 115 sets a plurality of virtual work straight lines L1 that are arranged at intervals of the plant interval from the work starting reference position Px, and sets the work starting position Ps on the virtual work straight line L1 in each of a plurality of straight routes R1.

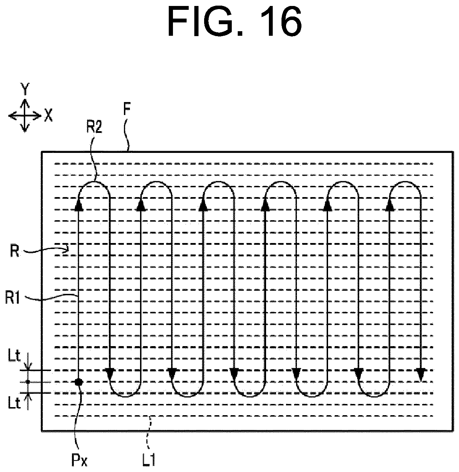

For example, as illustrated in FIG. 16, upon setting a work starting reference position Px in a field F, the setting processing unit 115 sets a virtual work straight line L1 that passes by the work starting reference position Px and extends in a X direction orthogonal to a working direction (Y direction), and sets a plurality of the virtual work straight lines L1 in a Y direction at intervals of a plant interval Lt. The setting processing unit 115 sets the virtual work straight lines L1 across an entire field F.

It is noted that in a case where a shape of the field F is not a rectangle but an irregular shape with inclined sides such as a trapezoid or a parallelogram, the setting processing unit 115 may set the virtual work straight line L1 that extends parallel to the inclined sides of the field F.

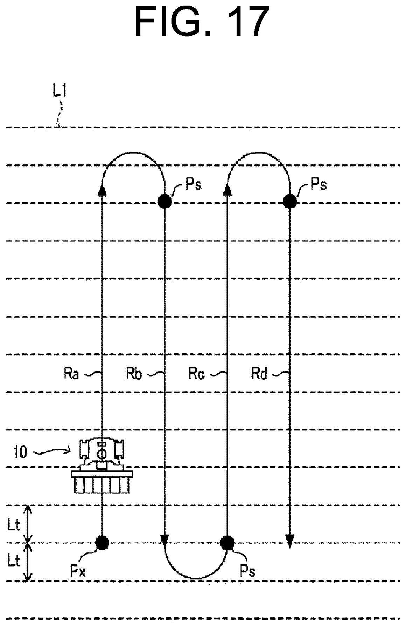

FIG. 17 illustrates one example of planting work. FIG. 17 shows a work route Ra of a first process, a work route Rb of a second process, a work route Rc of a third process, and a work route Rd of a fourth process. When the work vehicle 10 starts planting work at a work starting reference position Px on the work route Ra, the work vehicle 10 performs planting work at each plant interval Lt. When the work vehicle 10 moves to the second process, the setting processing unit 115 sets a work starting position Ps on a virtual work straight line L1 on the work route Rb. Similarly, when the work vehicle 10 moves to the third process, the setting processing unit 115 sets a work starting position Ps on a virtual work straight line L1 on the work route Rc. When the work vehicle 10 moves to the fourth process, the setting processing unit 115 sets a work starting position Ps on a virtual work straight line L1 on the work route Rd.

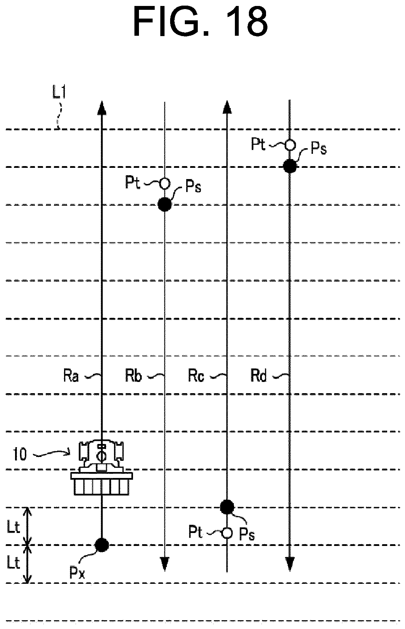

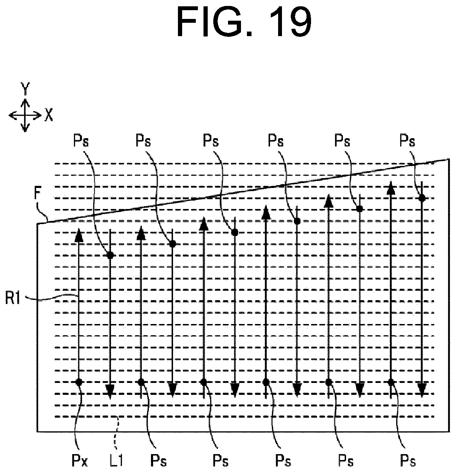

In the example illustrated in FIG. 17, a work starting position Ps is set on the identical virtual work straight line L1 in each process. As another embodiment, the setting processing unit 115 may set a work starting position Ps for each process on a different virtual work straight line L1. For example, as illustrated in FIG. 18, the setting processing unit 115 may set a work starting position Ps of the work route Rb and a work starting position Ps of the work route Rd on different virtual work straight lines L1. According to a configuration illustrated in FIG. 18, for example, as illustrated in FIG. 19, in a case where a shape of a field F is not a rectangle, that is to say, in a case where the field is inclined with respect to a working direction (Y direction), a work starting position Ps of each work route can be set at a position along such inclination. In other words, upon setting a work starting reference position Px, the setting processing unit 115 may set a work starting position Ps corresponding to each of a plurality of work routes on the basis of the plant intervals, the work starting reference position Px and the shape of the field F that have been obtained by the acquisition processing unit 112.

Thus, according to a configuration so as to set a plurality of work starting positions Ps on the basis of a work starting reference position Px, it is possible to set the work starting position Ps at an appropriate position regardless of a shape of a field F.

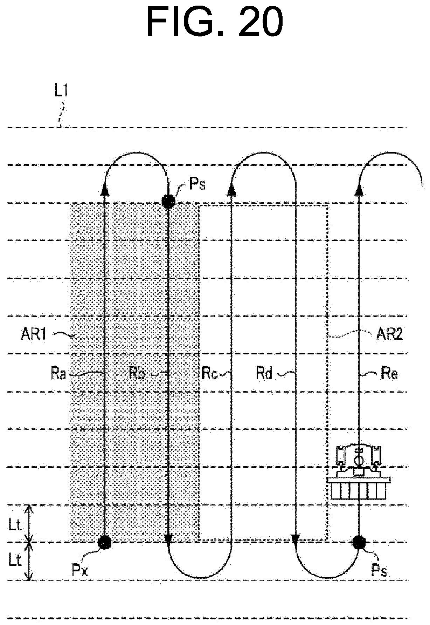

Here, the work vehicle 10 may suspend planting work in the middle of such planting work being performed on the basis of a work starting reference position Px and a work starting position Ps. For example, as illustrated in FIG. 20, the work vehicle 10 may suspend planting work after performing such planting work on a work route Ra and a work route Rb, skip a work route Rc and a work route Rd, and resume such planting work on a work route Re. In this case, the work route Ra and the work route Rb become a worked region AR1, and the work route Rc and the work route Rd become an unworked region AR2.

Thus, in a case where the worked area AR1 exists in the same field F at the time when the work vehicle 10 performs planting work, or in a case where the work vehicle 10 exists within a predetermined distance from the worked region AR1, the setting processing unit 115 does not set a position at which planting work is started as the work starting reference position Px but sets the position as the work starting position Ps. In the example illustrated in FIG. 20, the setting processing unit 115 sets on a virtual work straight line L1 a work starting position Ps at which planting work is started on the work route Re. In other words, the setting processing unit 115 sets the work starting position Ps of the work route Re using a work starting reference position Px set before the planting work is started on the work route Re. In addition, the setting processing unit 115 maintains the already set work starting reference position Px even in a case where the work vehicle 10 suspends the planting work in the field F. This makes it possible to automatically obtain in advance, as a work starting reference position Px, a position at which first planting work has been performed on the basis of a shape of a field F and work history information in the field F, which results in improvement on operability of an operator.

The setting processing unit 115 may also delete and reset a work starting reference position Px on the basis of either the behavior information or a change of a field F. For example, the setting processing unit 115 resets the work starting reference position Px in a case where the work vehicle 10 performs planting work in a field different from the field F. In other words, the setting processing unit 115 sets the work starting reference position Px for each field. The setting processing unit 115 may store a plurality of work starting reference positions Px set for each field in the storage unit 12. In this case, the setting processing unit 115 may obtain from the storage unit 12 the work starting reference position Px corresponding to a field at which the work vehicle 10 performs planting work to cause the work vehicle 10 to start planting work.

This enables an operator to optionally delete the work starting reference position Px, for example, in a case of changing a field in which planting work is to be performed. In addition, even in a case where an operator does not perform a deletion operation, it is possible to improve operability of the operator by such automatic deletion. Furthermore, in a case where planting work is performed in a new field, it is possible to prevent the work starting reference position Px that has been set in another field from being used.

A specific example of how to set a work starting position Ps for each work route will be described below. For example, among a plurality of virtual work straight lines L1, the setting processing unit 115 sets a work starting position Ps on the virtual work straight line L1 in the vicinity of a position of the work vehicle 10 at the time when a work starting operation is obtained. Alternatively, among a plurality of virtual work straight lines L1, the setting processing unit 115 sets a work starting position Ps on the virtual work straight line L1 that is closest in a working direction from a position of the work vehicle 10 at the time when a work starting operation is obtained. For example, taking the example illustrated in FIG. 18, when an operator operates the planting clutch lever and gives an instruction to start planting work at the time when the work vehicle 10 is at a position Pt on the work route Rb, the setting processing unit 115 sets a work starting position Ps on a virtual work straight line L1 that is closest in the working direction from the position Pt among the plurality of the virtual work straight lines L1.

The setting processing unit 115 may also set a work starting position Ps on a virtual work straight line L1 that is included within a distance or less preset on a traveling direction side on the basis of the working direction and the traveling direction of the work vehicle 10.

Thus, the setting processing unit 115 sets a work starting position Ps on a virtual work straight line L1 in accordance with human operation timing (for example, the operation PTO is turned 'ON' by an operator) and position information of the work vehicle 10.

As another embodiment, the setting processing unit 115 may set a work starting position Ps on a virtual work straight line L1 in accordance with movement timing of the work machine 14 and the position information of the work vehicle 10. It is noted that the movement timing may be generated on the basis of the human operation timing, or may be generated on the basis of information of a boundary position between a headland region and a region for back and forth work, excluding the headland region, in a field F. In addition, on the basis of a work starting position Ps and position information of the work vehicle 10, the vehicle control device 11 detects that the work vehicle 10 has reached the work starting position Ps and causes the work machine 14 to operate. This enables an actual work starting position to be aligned with the set work starting position Ps, which results in improvement on work accuracy. Taking into consideration a structural delay time until the work machine 14 starts driving, it is preferable to configure so as to cause the work machine 14 to start operating a little before the work starting position Ps.

As another method for setting a work starting position Ps, the setting processing unit 115 may set the work starting position Ps in a next work route on the basis of a work ending position of a work route where work has already been done. Specifically, the setting processing unit 115 identifies a virtual work straight line L1 corresponding to a planting work ending position on a work route in which a work starting reference position Px has been set, and sets a work starting position Ps corresponding to each of a plurality of work routes on the basis of the identified virtual work straight line L1 and the work starting reference position Px. For example, the setting processing unit 115 identifies a virtual work straight line L1 corresponding to a position at which planting work was last performed on the work route Ra. Then, the setting processing unit 115 sets a work starting position Ps in the next work route Rb on the virtual work straight line L1 that has been identified. The setting processing unit 115 may set the work starting position Ps of each work route on a virtual work straight line L1 that passes by the work starting reference position Px and on a virtual work straight line L1 corresponding to the position at which planting work was performed last on the work route Ra. This enables the work starting positions to be aligned across an entire rectangular field F.

The vehicle control device 11 may display, on the operation terminal 20, the work starting reference position Px, the work starting position Ps, and the virtual work straight line L1 that have been set as described above. This enables an operator to grasp the work starting positions in the respective work routes as well as to grasp whether the work starting positions are aligned across the entire field F. The vehicle control device 11 may also display each of the work starting reference position Px, the work starting position Ps, and the virtual work straight line L1 in a different manner.

[Planting work processing according to Embodiment 2]

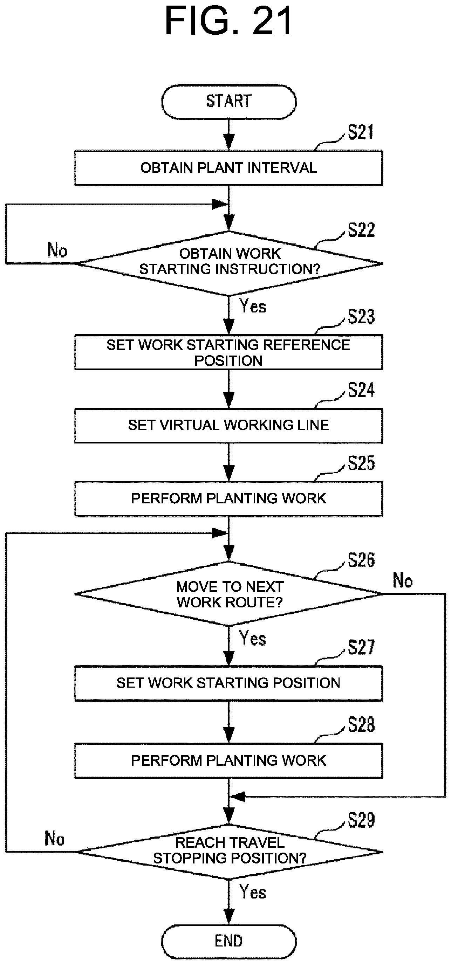

One example with regard to the planting work processing executed by the work system 1 will be described below with reference to FIG. 21.

FIG. 21 is a flowchart showing one example of the planting work processing executed in the work system 1 according to Embodiment 2.

First, in step S21, the vehicle control device 11 of the work vehicle 10 obtains a plant interval (planting interval) included in the work condition information. Specifically, the vehicle control device 11 obtains a plant interval Lt from information on work conditions (work condition information) related to planting work set on the setting screen 20B (refer to FIG. 12).

Next, in step S22, the vehicle control device 11 determines whether or not a work starting instruction has been obtained. Upon obtaining the work starting instruction (S22: Yes), the vehicle control device 11 shifts the processing to step S23. The vehicle control device 11 stands by until obtaining the work starting instruction (S22: No).

In step S23, the vehicle control device 11 sets a work starting reference position Px. For example, when an operator operates the planting clutch lever and gives an instruction to start planting work, the vehicle control device 11 drives (rotates) the work machine 14 to plant a seedling as a first plant and sets, as the work starting reference position Px, a position of the work machine 14 at the time when such planting of the seedling as the first plant has been detected (refer to FIG. 16). In other words, the vehicle control device 11 sets a position where planting work has been first performed in a field F as the work starting reference position Px.

Next, in step S24, the vehicle control device 11 sets a virtual work straight line L1. Specifically, the vehicle control device 11 sets a plurality of the virtual work straight lines L1 that are arranged at intervals of the plant interval Lt from the work starting reference position Px. For example, as illustrated in FIG. 16, the vehicle control device 11 sets a virtual work straight line L1 that passes by the work starting reference position Px and extends in a X direction orthogonal to a working direction (Y direction), and arranges a plurality of the virtual work straight lines L1 in a Y direction at intervals of the plant interval Lt. The vehicle control device 11 sets virtual work straight lines L1 across an entire field F.

Next, in step S25, the vehicle control device 11 performs planting processing. Specifically, the vehicle control device 11 performs planting processing in accordance with the target number of times that is "n time(s) per L (m)", which is included in the work condition information, on a work route. The vehicle control device 11 outputs a rotational frequency $\omega$ of the planting unit corresponding to the target number of times to the planting driving device 18 to drive (rotate) the work machine 14 (planting unit).

Next, in Step S26, the vehicle control device 11 determines whether or not the work vehicle 10 has moved to a next work route (process). When the work vehicle 10 moves to the next work route (S26: Yes), the vehicle control device 11 shifts the processing to step S27. On the other hand, in a case where the work vehicle 10 does not move to the next work route (S26: No), the vehicle control device 11 shifts the processing to step S29.

In step S27, the vehicle control device 11 sets a work starting position Ps of the next work route. Specifically, the vehicle control device 11 sets a work starting position Ps of the work route on a predetermined virtual work straight line L1 among a plurality of the virtual work straight lines L1.

For example, as illustrated in FIG. 18, when an operator operates the planting clutch lever and gives an instruction to start planting work at the time when the work vehicle 10 reaches the position Pt on the work route Rb, the vehicle control device 11 sets the work starting position Ps on the virtual work straight line L1 that is closest in the working direction from the position Pt among the plurality of the virtual work straight lines L1.

Next, in step S28, the vehicle control device 11 executes planting process on a work route on the basis of the set work starting position Ps. Specifically, the vehicle control device 11 executes the planting process according to the target number of times that is "n time(s) per L (m)" from the work starting position Ps on the work route Rb (refer to FIG. 18).

As another embodiment, in a case where a shape of a field F is not a rectangle but includes an inclined side as illustrated in FIG. 19, the vehicle control device 11 may control drive timing of the planting unit 34 along such inclination. For example, in the field F illustrated in FIG. 19, in a case where the work vehicle 10 with six row planting performs traveling and planting processing toward an inclined side (traveling from a lower side to an upper side in FIG. 19), the vehicle control device 11 performs a row stop in two rows at a left side and planting processing in four rows at a center and right side, and then performs a row stop in four rows at a left side and center and planting processing in two rows at a right side. Thus, the vehicle control device 11 can align planting positions so as to be arranged along the inclination by deviating timing of the row stop by each of a plurality of the planting units 34 in accordance with the inclination.

Next, in step S29, the vehicle control device 11 determines whether or not the work vehicle 10 has reached a travel stopping position G. For example, the vehicle control device 11 terminates the processing when the work vehicle 10 reaches the travel stopping position G (S29: Yes). In a case where the work vehicle 10 has not reached the travel stopping position G (S29: No), the vehicle control device 11 shifts the processing to step S26. It is noted that the vehicle control device 11 may terminate the processing in a case where a field F to be worked in has been changed or a case where behavior information has changed.

When the work vehicle 10 moves to a next work route (for example, work route Rc in FIG. 18) (S26: Yes), the vehicle control device 11 sets a work starting position Ps of the work route Rc in step S27. In this case, on the work route Rc, the vehicle control device 11 may set the work starting position Ps on a virtual work straight line L1 that is closest in the working direction from the position Pt of an operator's work starting instruction (refer to FIG. 18), or may set the work starting position Ps on a virtual work straight line L1 that passes by the work starting reference position Px (refer to FIG. 17).

The vehicle control device 11 continues the above-mentioned processing (S26 to S28) until the work vehicle 10 reaches the travel stopping position G (S29: No). The vehicle control device 11 performs the planting work processing as described above.

As explained above, the work system 1 according to Embodiment 2 supplies agricultural materials (seedlings, seeds, fertilizers, chemical agents, and the like) to the field F by the work vehicle 10. The work system 1 also obtains a supply interval (plant interval Lt) of agricultural materials, sets a work starting reference position Px, which is a reference position for setting a work starting position Ps where supply work of the agricultural materials is started, and sets the work starting position Ps corresponding to each of a plurality of work routes on the basis of the supply interval and the work starting reference position Px.

The above-mentioned configuration, for example, enables the work starting position Ps of each work route to be set in accordance with the work starting reference position Px. It is also possible to set the work starting position Ps of each work route at the preset supply interval position. This makes it possible to align the work starting positions Ps of the respective work routes in an entire field F.

As another embodiment of the work system 1 according to Embodiment 2, the vehicle control device 11 may set a work starting position Ps of each work route on the basis of a shape of the field F. For example, the vehicle control device 11 may set a work starting position Ps at a position of a predetermined distance from a ridge adjacent to the field F. In addition, in a case of a traveling mode in which the work vehicle 10 performs automatic traveling only on a straight route R1 and in a case where a reference line that defines a straight direction is registered in advance, the vehicle control device 11 may set a work starting positions Ps at positions of both registered end points (points A and B) with respective to the reference line.

As another embodiment, in a case of a traveling mode in which the work vehicle 10 performs automatic traveling over an entire field F (straight route R1 and headland region), the vehicle control device 11 may set in advance a work starting reference position Px and a work starting position Ps in an entire field F on the basis of information on the field F, a target route R and work conditions.

The configuration shown in Embodiment 2 can be applied to Embodiment 1. For example, the vehicle control device 11 may set a work starting position P0 illustrated in FIG. 6 on a virtual work straight line L1 (refer to FIG. 16). As illustrated in FIG. 10, for example, in a case where the vehicle control device 11 resets a work starting position P0' after planting work in a plurality of predetermined sections are completed, the work starting position P0' may be set on a virtual work straight line L1 (refer to FIG. 16). That is to say, in the work system 1 according to Embodiment 1, the vehicle control device 11 may set the work starting position P0 of each work route on the virtual work straight line L1 set on the basis of a work starting reference position Px and a plant interval.

Each function of the vehicle control device 11 according to Embodiments 1 and 2 may be disposed outside the work vehicle 10 or may be included in the operation control unit 21 of the operation terminal 20. That is to say, in the above-mentioned embodiments, the vehicle control device 11 corresponds to a work system according to the present invention, and the work system according to the present invention may be constituted of the operation terminal 20 alone. The work system according to the present invention may also be configured so as to include the work vehicle 10 and the operation terminal 20. Furthermore, each function of the vehicle control device 11 may be included in a server that can communicate with the work vehicle 10.

[Appendix to the Invention]

Appended below is a summary of the invention extracted from the above-mentioned Embodiment 1. It is noted that respective components and processing functions described in the appendices below can be selected and optionally combined.

<Appendix 1>

A work method for supplying agricultural materials to a field by a work vehicle, the method comprising: obtaining the target number of times of supplying the agricultural materials per a predetermined distance on a work route; obtaining a travel distance of the work vehicle at the time when the work vehicle completes the target number of times of supplying the agricultural materials in a first predetermined section of the work route; and setting a supply interval of the agricultural materials in a second predetermined section following the first predetermined section on the work route on the basis of the predetermined distance and the travel distance.

<Appendix 2>

The work method according to appendix 1, wherein the supply interval is set in the second predetermined section on the basis of a difference between a distance of all the sections that is an integral multiple of the predetermined distance in accordance with the number of predetermined sections including the predetermined first section and the travel distance.

<Appendix 3>

The work method according to appendix 1 or 2, wherein the supply interval is set so that actual density which is calculated by dividing the actual number of times of the work vehicle having supplied the agricultural materials in a section of the travel distance by the travel distance can approach target density which is calculated by dividing the target number of times by the predetermined distance.

<Appendix 4>

The work method according to appendix 2, wherein the supply interval is set so that a deviation rate which is calculated by dividing the difference by the distance of all the sections can approach zero.

<Appendix 5>

The work method according to appendix 4, wherein a correction coefficient for correcting a rotational frequency of a supplying unit that supplies the agricultural materials in the field is set on the basis of the deviation rate.

<Appendix 6>

The work method according to any one of appendices 1 to 5, wherein setting of a work starting position where supply work of the agricultural materials is started is further carried out, and the travel distance is a distance from the work starting position to a position of the work vehicle at the time when the work vehicle completes the target number of times of supplying the agricultural materials.

<Appendix 7>

The work method according to appendix 4 or 5, wherein in a case where supply work of the agricultural materials is suspended and resumed on the work route, the supplying interval is set in a predetermined section following the predetermined section after such work is resumed on the basis of a total deviation rate that is the sum of the deviation rate before such work is resumed and the deviation rate corresponding to the predetermined section after such work is resumed.

<Appendix 8>

The work method according to appendix 7, wherein in a case where a work route before the supply work is resumed and a work route after such work is resumed are routes in the same work process, the supply interval is set in a predetermined section following the predetermined section after such work is resumed on the basis of the total deviation rate.

<Appendix 9>

The work method according to any one of appendices 1 to 8, wherein the work starting position is reset each in a plurality of the predetermined sections in a case where the work route is a nonlinear route.
Appended below is a summary of the invention extracted from the above-mentioned Embodiment 2. It is noted that respective components and processing functions described in the appendices below can be selected and optionally combined.

<Appendix 10>

A work method for supplying agricultural materials to a field by a work vehicle, the method comprising: obtaining a supply interval of the agricultural materials; setting a work starting reference position that is a reference position for setting a work starting position where supply work of the agricultural materials is started; and setting the work starting position corresponding to each of a plurality of work routes on the basis of the supply interval and the work starting reference position.

<Appendix 11>

The work method according to appendix 10, wherein a plurality of virtual work straight lines that are arranged at the supply intervals from the work starting reference position are set, and the work starting position is set on the virtual work straight line in each of the plurality of the work routes.

<Appendix 12>

The work method according to appendix 11, wherein each of the plurality of the virtual work straight lines is set so as to extend in a direction orthogonal to a working direction of the supply work on the work route.

<Appendix 13>

The work method according to any one of appendices 10 to 12, wherein the work starting reference position is set on the basis of behavior information on the work vehicle.

<Appendix 14>

The work method according to any one of appendices 10 to 13, wherein among the plurality of the work routes, the work starting reference position is set at a position where the agricultural materials are first supplied on a work route in which the supply work is first performed.

<Appendix 15>

The work method according to any one of appendices 10 to 14, wherein the set work starting reference position is maintained even in a case where the work vehicle suspends the supply work in the field.

<Appendix 16>

The work method according to any one of appendices 10 to 15, wherein the work starting reference position is reset in a case where the work vehicle performs the supply work in a field different from the field.

<Appendix 17>

The work method according to any one of appendices 11 to 16, wherein among the plurality of the virtual work straight lines, the work starting position is set on a virtual work straight line in the vicinity of a position of the work vehicle at the time when a work starting operation is obtained.

<Appendix 18>

The work method according to any one of appendices 11 to 17, wherein among the plurality of the virtual work straight lines, the work starting position is set on a virtual work straight line that is closest in a working direction of the supply work from a position of the work vehicle at the time when a work starting operation is obtained.

<Appendix 19>

The work method according to any one of appendices 11 to 17, wherein the virtual work straight line corresponding to an ending position of the supply work is identified on the work route in which the work starting reference position has been set, and the work starting position corresponding to each of the plurality of the work routes is set on the basis of the identified virtual work straight line and the work starting reference position.

REFERENCE SIGNS LIST

1: work system
10: work vehicle
11: vehicle control device
14: work machine
16: positioning device
18: planting driving device
20: operation terminal
20A: setting screen
20B: setting screen
111: traveling processing unit
112: acquisition processing unit (first acquisition processing unit, second acquisition processing unit)
113: planting processing unit
114: calculation processing unit
115: setting processing unit
161: positioning control unit
D1: travel distance
D2: travel distance
F: field
L1: virtual work straight line
Lt: plant interval (supply interval)
P0: work starting position
Ps: work starting position
Px: work starting reference position
R: target route
S: correction level
St: travel starting position
X1: predetermined section
a: correction coefficient
n: target number of times
t1: distance difference
t2: distance difference
$\varepsilon$: deviation rate
$\omega$: rotational frequency of a planting unit

**Claims**

1. A work method for supplying agricultural materials to a field by a work vehicle, the method comprising:

   obtaining a supply interval of the agricultural materials;
   setting a work starting reference position that is a reference position for setting a work starting position where supply work of the agricultural materials is started; and
   setting the work starting position corresponding to each of a plurality of work routes on the basis of the supply interval and the work starting reference position.

2. The work method according to claim 1, wherein a plurality of virtual work straight lines that are arranged at the supply intervals from the work starting reference position are set, and
   the work starting position is set on the virtual work straight line in each of the plurality of the work routes.

3. The work method according to claim 2, wherein each of the plurality of the virtual work straight lines is set so as to extend in a direction orthogonal to a working direction of the supply work on the work route.

4. The work method according to claim 1, wherein the work starting reference position is set on the basis of behavior information on the work vehicle.

5. The work method according to claim 1, wherein among the plurality of the work routes, the work starting reference position is set at a position where the agricultural materials are first supplied on a work route in which the supply work is first performed.

6. The work method according to claim 5, wherein the set work starting reference position is maintained even in a case where the work vehicle suspends the supply work in the field.

7. The work method according to claim 5, wherein the work starting reference position is reset in a case where the work vehicle performs the supply work in a field different from the field.

8. The work method according to any one of claims 1 to 7, wherein
   among the plurality of the virtual work straight lines, the work starting position is set on a virtual work straight line in the vicinity of a position of the work vehicle at the time when a work starting operation is obtained.

9. The work method according to claim 8, wherein among the plurality of the virtual work straight lines, the work starting position is set on a virtual work straight line that is closest in a working direction of the supply work from a position of the work vehicle at the time when a work starting operation is obtained.

10. The work method according to claim 2, wherein

    the virtual work straight line corresponding to an ending position of the supply work is identified on the work route in which the work starting reference position has been set, and
    the work starting position corresponding to each of the plurality of the work routes is set on the basis of the identified virtual work straight line and the work starting reference position.

11. A work system for supplying agricultural materials to a field by a work vehicle, the work system comprising:

an acquisition processing unit that obtains a supply interval of the agricultural materials; and a setting processing unit that sets a work starting reference position that is a reference position for setting a work starting position where supply work of the agricultural materials is started and that sets the work starting position corresponding to each of a plurality of work routes on the basis of the supply interval and the work starting reference position.

12. A work program for supplying agricultural materials to a field by a work vehicle, the program causing one or more processors to execute:

obtaining a supply interval of the agricultural materials;
setting a work starting reference position that is a reference position for setting a work starting position where supply work of the agricultural materials is started; and
setting the work starting position corresponding to each of a plurality of work routes on the basis of the supply interval and the work starting reference position.

# FIG. 1

1

| 10 | WORK VEHICLE |
| --- | --- |

| 11 | VEHICLE CONTROL DEVICE |
| --- | --- |
| 111 | TRAVELING PROCESSING UNIT |
| 112 | ACQUISITION PROCESSING UNIT |
| 113 | PLANTING PROCESSING UNIT |
| 114 | CALCULATION PROCESSING UNIT |
| 115 | SETTING PROCESSING UNIT |

| 16 | POSITIONING DEVICE |
| --- | --- |
| 161 | POSITIONING CONTROL UNIT |
| 162 | STORAGE UNIT |
| 163 | COMMUNICATION UNIT |
| 164 | POSITIONING ANTENNA |

| 12 | STORAGE UNIT |
| --- | --- |
| 13 | VEHICLE BODY |
| 14 | WORK MACHINE |
| 15 | COMMUNICATION UNIT |

| 17 | ROTATION SENSOR |
| --- | --- |
| 18 | PLANTING DRIVING DEVICE |

N1

| 20 | OPERATION TERMINAL |
| --- | --- |
| 21 | OPERATION CONTROL UNIT |
| 211 | SETTING PROCESSING UNIT |
| 212 | OUTPUT PROCESSING UNIT |

| 22 | STORAGE UNIT |
| --- | --- |
| 23 | OPERATION DISPLAY UNIT |
| 24 | COMMUNICATION UNIT |

# FIG. 2A

# FIG. 2B

# FIG. 3

EP 4 292 415 A1

# FIG. 4A

18

181

DRIVING
SOURCE

182

TRANSMISSION

183

STEPLESS
SPEED CHANGE
DEVICE

14

WORK
MACHINE

TRAVELING
UNIT

184

# FIG. 4B

18

181A

DRIVING SOURCE

182A

TRANSMISSION

14

WORK
MACHINE

181B

DRIVING SOURCE

182B

TRANSMISSION

184

TRAVELING
UNIT

# FIG. 5

# FIG. 6

# FIG. 7

# FIG. 8

# FIG. 9

# FIG. 10

# FIG. 11

**20A**

**20**

<table>
<tr><td>MAP</td><td>? HELP</td><td colspan="2">MENU</td><td>GNSS ☰ MENU</td></tr>
</table>

**PLEASE SELECT ITEM**

**FIELD REGISTRATION**

NUMBER OF REGISTERED FIELDS: **

**WORK MACHINE REGISTRATION**

NUMBER OF REGISTERED FIELDS: **

**WORK REGION REGISTRATION**

NUMBER OF REGISTERED FIELDS: **

**ROUTE GENERATION**

REGISTRATION INFORMATION EDIT / DELETE

WORK HISTORY

VARIOUS SETTINGS

END APPLICATION

EP 4 292 415 A1

# FIG. 12

20B

20

EP 4 292 415 A1

| MAP | ? HELP | PLANTING WORK - SETTING SCREEN | GNSS ☰ MENU |

## SET WORK CONDITIONS

| SETTING ITEMS | SETTING VALUE | |
|---|---|---|
| NUMBER OF PLANTS [/3.3m$^2$] | 50 PLANTS | K1 |
| PLANT INTERVAL [cm] | 22.0 cm | K2 |
| CORRECTION [ON/OFF] | ON | K3 |
| CORRECTION SENSITIVITY | 4/5 | K4 |

< BACK    NEXT >

# FIG. 13

```
                    ┌─────────────┐
                    │    START    │
                    └─────────────┘
                           │
                           ▼               S11
        ┌──────────────────────────────────────┐
        │   OBTAIN TARGET NUMBER OF TIMES        │
        └──────────────────────────────────────┘
                           │
              ┌────────────┤
              │            ▼               S12
              │         ╱─────────────────────╲
         No   │        ╱  OBTAIN WORK STARTING  ╲
        ◄─────┤        ╲     INSTRUCTION?        ╱
                        ╲─────────────────────╱
                           │ Yes
                           ▼               S13
        ┌──────────────────────────────────────┐
        │      SET WORK STARTING POSITION        │
        └──────────────────────────────────────┘
                           │
              ┌────────────┤
              │            ▼               S14
              │  ┌──────────────────────────────┐
              │  │      PERFORM PLANTING WORK     │
              │  └──────────────────────────────┘
              │            │
              │            ▼               S15
              │         ╱─────────────────╲       No
              │        ╱  ACHIEVE TARGET    ╲──────────┐
              │        ╲  NUMBER OF TIMES?   ╱          │
              │         ╲─────────────────╱            │
              │            │ Yes                        │
              │            ▼               S16          │
              │  ┌──────────────────────────────┐       │
              │  │     OBTAIN TRAVEL DISTANCE     │       │
              │  └──────────────────────────────┘       │
              │            │                            │
              │            ▼               S17          │
              │         ╱─────────────────╲   Yes       │
              │        ╱      TRAVEL        ╲───────────►│
              │        ╲ DISTANCE AND DISTANCE OF ALL    │
              │        ╱ SECTIONS COINCIDE WITH EACH     │
              │        ╲      OTHER?        ╱            │
              │         ╲─────────────────╱             │
              │            │ No             S18          │
              │  ┌──────────────────────────────┐       │
              │  │    CORRECT PLANTING INTERVAL   │       │
              │  └──────────────────────────────┘       │
              │            │◄──────────────────────────┘
              │            ▼               S19
         No   │         ╱─────────────────╲
        ◄─────┤        ╱   REACH TRAVEL     ╲
                       ╲ STOPPING POSITION? ╱
                        ╲─────────────────╱
                           │ Yes
                           ▼
                    ┌─────────────┐
                    │     END     │
                    └─────────────┘
```

# FIG. 14

P1～○
P1～○
⋮ } 10 TIMES (10.5 TIMES/2M):
SATISFIED
P1～○
P1～○

P1～○
P1～○
⋮ } 11 TIMES (10.5 TIMES/2M):
SATISFIED
P1～○
P1～○

P1～○
P1～○
⋮ } 9 TIMES (10 TIMES/2M):
UNSATISFIED
P1～○
P1～○

6m
4m
2m

P0

# FIG. 15

P1〜O
P1〜O
⋮
P1〜O
P1〜O
} 10 TIMES (11 TIMES/2M):
SATISFIED

P1〜O
P1〜O
⋮
P1〜O
P1〜O
} 11 TIMES (12 TIMES/2M):
SATISFIED

P1〜O
P1〜O
⋮
P1〜O
P1〜O
} 10 TIMES (11 TIMES/2M):
UNSATISFIED

P1〜O
P1〜O
⋮
P1〜O
P1〜O
} 9 TIMES (10 TIMES/2M):
UNSATISFIED

8m

6m

4m

2m

P0

# FIG. 16

# FIG. 17

# FIG. 18

# FIG. 19

EP 4 292 415 A1

# FIG. 20

42

# FIG. 21

```
                    ┌─────────────┐
                    │    START    │
                    └─────────────┘
                           │
                           ▼                    S21
              ┌──────────────────────────┐
              │   OBTAIN PLANT INTERVAL   │
              └──────────────────────────┘
                           │
                           ▼                    S22
        No    ◇──────────────────────────◇
        ┌─────  OBTAIN WORK
        │        STARTING INSTRUCTION?
        │              ◇──────────────────◇
        │                     │ Yes
        │                     ▼                 S23
        │      ┌──────────────────────────┐
        │      │ SET WORK STARTING REFERENCE│
        │      │         POSITION           │
        │      └──────────────────────────┘
        │                     │
        │                     ▼                 S24
        │      ┌──────────────────────────┐
        │      │   SET VIRTUAL WORKING LINE │
        │      └──────────────────────────┘
        │                     │
        │                     ▼                 S25
        │      ┌──────────────────────────┐
        │      │   PERFORM PLANTING WORK    │
        │      └──────────────────────────┘
                           │
                           ▼                    S26
              ◇──────────────────────────◇  No
               MOVE TO NEXT WORK ROUTE?   ────┐
              ◇──────────────────────────◇    │
                     │ Yes                     │
                     ▼          S27            │
        ┌──────────────────────────┐          │
        │  SET WORK STARTING POSITION│         │
        └──────────────────────────┘          │
                     │          S28            │
        ┌──────────────────────────┐          │
        │   PERFORM PLANTING WORK    │         │
        └──────────────────────────┘          │
                     │◄────────────────────────┘
                     ▼                    S29
   No   ◇──────────────────────────◇
   ┌─────  REACH TRAVEL
   │        STOPPING POSITION?
   │       ◇──────────────────◇
   │              │ Yes
   │              ▼
   │      ┌─────────────┐
   │      │     END     │
   │      └─────────────┘
```

43

Europäisches
Patentamt

European
Patent Office

Office européen
des brevets

# EUROPEAN SEARCH REPORT

**Application Number**

EP 23 17 5944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/145046 A1 (KUBOTA KK [JP]) 22 July 2021 (2021-07-22) * abstract; figures * * paragraphs [0041], [0048] * ----- | 1-12 | INV. A01C14/00 A01B69/04 G05D1/02 |

| TECHNICAL FIELDS SEARCHED (IPC) |
|---|
| A01C A01B G05D |

The present search report has been drawn up for all claims

| Place of search | Date of completion of the search | Examiner |
|---|---|---|
| Munich | 6 November 2023 | Alff, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 5944

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2023

| Patent document cited in search report | Publication date | Patent family member(s) | Publication date |
|---|---|---|---|
| WO 2021145046 A1 | 22-07-2021 | CN 114786466 A<br>KR 20220125223 A<br>WO 2021145046 A1 | 22-07-2022<br>14-09-2022<br>22-07-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002335720 A